(19) Europäisches Patentamt
European Patent Office
Office européen des brevets

(11) **EP 2 785 438 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(21) Anmeldenummer: **12798667.7**

(22) Anmeldetag: **29.11.2012**

(51) Int Cl.:
**B01D 61/44** *(2006.01)*    **B01D 61/50** *(2006.01)*
**B01D 63/08** *(2006.01)*    **C02F 1/469** *(2006.01)*

(86) Internationale Anmeldenummer:
**PCT/EP2012/073950**

(87) Internationale Veröffentlichungsnummer:
**WO 2013/079588 (06.06.2013 Gazette 2013/23)**

(54) **VERFAHREN ZUR REGENERATION WÄSSRIGER DISPERSIONEN SOWIE ZELLPAKET FÜR DIE ELEKTRODIALYSE**

METHOD FOR REGENERATING AQUEOUS DISPERSIONS AND CELL PACKAGE FOR ELECTRODIALYSIS

PROCÉDÉ DE RÉGÉNÉRATION DE DISPERSIONS AQUEUSES ET ENSEMBLE DE CELLULES POUR L'ÉLECTRODIALYSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2011 DE 102011087314**

(43) Veröffentlichungstag der Anmeldung:
**08.10.2014 Patentblatt 2014/41**

(73) Patentinhaber: **Henkel AG & Co. KGaA**
**40589 Düsseldorf (DE)**

(72) Erfinder:
• **LEPA, Klaus**
**53842 Troisdorf (DE)**
• **DAWIDOWSKI, Ulrich**
**72218 Wildberg (DE)**

(56) Entgegenhaltungen:
EP-A2- 1 000 654    US-A- 4 600 493
US-A- 4 636 288    US-A- 4 804 451

• **RAJANI B N ET AL: "Numerical simulation of laminar flow past a circular cylinder", APPLIED MATHEMATICAL MODELLING, GUILDFORD, GB, vol. 33, no. 3, 1 March 2009 (2009-03-01), pages 1228-1247, XP025656171, ISSN: 0307-904X, DOI: 10.1016/J.APM.2008.01.017 [retrieved on 2008-02-02]**

**Beschreibung**

Die vorliegende Erfindung betrifft ein Verfahren zur Reduzierung der Ionenstärke oder bestimmter polyvalenter Ionen in wässrigen Dispersionen von organischen Bindemitteln oder anorganischen Festkörpern unter Anwendung der Elektrodialyse sowie ein Zellpaket, das für das erfindungsgemäße Verfahren geeignet ist. Das erfindungsgemäße Verfahren erlaubt es, wässrige Zusammensetzungen der dispergierten Komponenten durch Regulierung der Ionenstärke oder der Konzentration bestimmter polyvalenter Ionen zu stabilisieren und damit Stand- und Durchlaufzeiten beispielsweise von Beschichtungsbädern deutlich zu erhöhen. Insbesondere findet das Verfahren Anwendung in der Entfernung von polyvalenten MetallKationen aus anionisch stabilisierten wässrigen Bindemitteldispersionen. Eine spezielle Anwendung besteht darin, aus autophoretischen Bädern, die anionisch dispergierte organische Bindemittel und ggf. anorganische Pigmente für die Ausbildung von Schutzschichten auf metallischen Bauteilen enthalten, polyvalente Kationen von Zink, Eisen und Aluminium zu entfernen, die sich im Bad beim Durchlauf einer Vielzahl von Bauteilen, deren Oberflächen zumindest teilweise aus Zink, Eisen und/oder Aluminium gefertigt sind, aufgrund von Beizprozessen anreichern.

Wässrige Zusammensetzungen enthaltend dispergierte Aktivkomponenten werden in einer Vielzahl industrieller Prozesse zur Oberflächenbehandlung von Bauteilen und Halbzeugen eingesetzt, wobei die Bauteile und Halbzeuge meist durch Sprühen oder Tauchen mit der wässrigen Dispersion in Kontakt gebracht werden. Die wässrigen Dispersionen, die zur Vergütung der Oberflächen mit den Bauteilen und Halbzeugen in Kontakt gebracht werden, können zumeist vielfach appliziert werden, bevor die Dispersion an Aktivkomponenten soweit verarmt, dass eine Zudosierung von Aktivkomponenten für den gewünschten Behandlungserfolg vorgenommen werden muss. Die zur Oberflächenbehandlung eingesetzten wässrigen Dispersionen werden also nach dem In-Kontakt-bringen mit dem Bauteil aufgefangen oder in Tauchbädern bevorratet und ggf. aufbereitet und regeneriert, um erneut zur Oberflächenbehandlung appliziert werden zu können. Eine solche wiederkehrende oder kontinuierliche Applikation führt dazu, dass Verunreinigungen, die den Bauteilen anhaften, von den wässrigen Dispersionen aufgenommen und mit der Zeit aufkonzentriert werden.

Besonders kritisch ist das Aufsalzen der wässrigen Dispersionen, also die Einschleppung von Salzen, da hierdurch die Stabilität der dispergierten Aktivkomponenten deutlich herabgesetzt wird. Mit zunehmender Ionenstärke neigen Dispersionen zu Koagulation, da die elektrostatischen Abstoßungskräfte zwischen gleichartigen geladenen elektrolytischen Doppelschichten der dispergierten Aktivkomponenten deutlich abgeschwächt werden, so dass die thermodynamisch begünstigte Koagulation weniger stark gehemmt ist. Technische Probleme bereitet die fortschreitende Koagulation der dispergierten Aktivkomponenten zum einen, da sedimentierte Aktivkomponenten nicht mehr für die Oberflächenvergütung zur Verfügung stehen, und zum anderen, dadurch dass das Ergebnis der Oberflächenvergütung häufig auch von der Größenverteilung der dispergierten Aktivkomponenten abhängt.

So gelingt die Aktivierung von Automobilkarosserien vor einer korrosionsschützenden Phosphatierung mit wässrigen kolloidalen Zusammensetzungen von schwerlöslichen Phosphaten oder Titansalzen, die auf den Metalloberflächen Kristallisationskeime für die nachfolgende Phosphatierung bilden. Derartige Aktivierungsbäder sind in der EP 0977908 beziehungsweise in der WO 94/029495 beschrieben. Die Fähigkeit zur Bildung von Kristallisationskeimen besitzen die Aktivkomponenten nur dann, wenn sie eine gewisse Partikelgröße nicht überschreiten. Die Karosserien werden in der Phosphatierstrasse der automobilen Fertigung mit der Aktivierungslösung üblicherweise durch Sprühen oder Tauchen in Kontakt gebracht, wobei Verschmutzungen, insbesondere Salze, von der Karosserie in die Aktivierungslösung eingebracht werden. Das Einschleppen bestimmter störender polyvalenter Ionen, beispielsweise aus der zu behandelnden Metallkarosserie, in solche Aktivierungsbäder für die Phosphatierung kann aufgrund der damit einhergehenden beschleunigten Koagulation zu einem schnelleren Verbrauch der Aktivierungslösung führen, die demnach entweder früh zu verwerfen ist oder über die Zudosierung von Konzentraten regeneriert werden muss. Eine derartige spezifische Aufsalzung bzw. Einschleppung von störenden Ionen ist daher nur in einem bestimmten Konzentrationsbereich tolerabel.

In besonderem Maße wird auch die Stabilität von organischen Bindemitteldispersionen durch den Eintrag polyvalenter Ionen beeinflusst. Beispielsweise werden Aluminiumsalze häufig als Hilfsmittel zur Abtrennung von Lackbestandteilen in der Nassauswaschung von Lackierkabinen in der Automobilindustrie eingesetzt. In vielen Anwendungen steht jedoch die Aufrechterhaltung der Stabilität von wässrigen Bindemitteldispersionen im Vordergrund. So werden Automobilkarosserien nach der korrosionsschützenden Phosphatierung üblicherweise mit einem Tauchlack versehen. Der Tauchlack ist eine wasserbasierte Dispersion eines oder mehrerer organischer Bindemittel, deren Abscheidung auf der Karosserie beim Eintauchen in den Tauchlack stromlos oder unter Anlegen einer äußeren Spannung gelingt. Der Abscheidemechanismus des Bindemittels im Tauchlack basiert darauf, dass die Oberflächenladung der dispergierten Bindemittel in unmittelbarer Nähe zur Oberfläche der Karosserie aufgehoben wird, so dass eine Koagulation und Abscheidung von Bindemittelpartikeln erfolgt. Tauchlacke neigen daher anwendungsbedingt zur Koagulation, wenn die Konzentration einer bestimmten Ionensorte überschritten wird. Umgekehrt bedeutet dies, dass die Einschleppung oder Aufkonzentration bestimmter Ionen, die Stabilität des Tauchlackes stark vermindern kann. Typischerweise bestehen anodische oder autophoretische Tauchlacke im Wesentlichen aus anionisch stabilisierten Bindemittelbestandteilen, die in Gegenwart polyvalenter Kationen schnell koagulieren können.

Es besteht also ein Bedarf, die Ionenstärke oder die Konzentration bestimmter polyvalenter Ionen in wässrigen Dispersionen von anorganischen Festkörpern und/oder organischen Bindemitteln zu regulieren, um die Stabilität der Dispersionen über einen längeren Zeitraum aufrecht zu erhalten. Hierfür ist es notwendig ein Verfahren zu etablieren, dass eine selektive Verarmung polyvalenter Kationen in wässrigen Dispersionen herbeiführt, jedoch ohne den Anteil an dispergierten Aktivkomponenten nennenswert zu verringern.

Im Stand der Technik existieren hierzu verschiedene etablierte Trennverfahren bei denen ein selektiver Stofftransport durch Membranen stattfindet. Sicherlich ist dem Fachmann allgemein bekannt, dass er die Filtration mit Ausschlussgrenzen, die gerade unterhalb der mittleren Partikelgröße der dispergierten Aktivkomponenten liegt, nutzen kann, um die Aktivkomponenten von der wässrigen Phase zu trennen. Jedoch eignen sich sogenannte "kuchenbildende" Filtrationsmethoden nicht zur Gewinnung eines Filtrates, das die überschüssigen beziehungsweise störenden polyvalenten Ionen enthält, da der Filterkuchen bestehend aus dem zurückgehaltenen Aktivkomponenten nur unter hohem Aufwand redispergiert werden kann. Membranfiltrationsmethoden, die als Cross-Flow-Filtration betrieben werden, sind prinzipiell geeignet für die Gewinnung eines Filtrats, wobei dem Retentat bei Verwendung von ionenaustauschenden Membranen auch selektiv störende Ionen entzogen werden können. Allerdings wird die wässrige Dispersion bei sogenannten Cross-Flow-Filtrationen hohen Scherbeanspruchungen ausgesetzt, die in der Filtereinheit und in den Pumpen zu einer Koagulation der dispergierten Bestandteile führt. Dieses Phänomen tritt häufig bei Dispersionen von organischen Bindemitteln ein, so dass die Cross-Flow-Filtration beispielsweise von Tauchlacken zur Reduzierung der Ionenstärke nicht angewandt werden kann. Den Filtrationsmethoden ist gemein, dass die überschüssigen beziehungsweise störenden polyvalenten Ionen zunächst aus dem Filtrat beispielsweise durch Ausfällung entfernt werden müssen, bevor das Filtrat der Dispersion wieder zugeführt werden kann und insgesamt eine Reduzierung der Ionenstärke oder der Konzentration bestimmter polyvalenter Ionen in der Dispersion resultiert. Die Anwendung von Filtrationsmethoden ist daher auch in den Fällen, in denen eine hinreichend hohe Stabilität der Dispersion gegenüber Scherbeanspruchung gegeben ist, für die Reduzierung der Ionenstärke verfahrenstechnisch äußerst aufwendig.

Aus der DE 3431276 geht ein Verfahren zur Reduzierung der Ionenstärke in Harzdispersionen hervor, das für die außenstromlose Selbstabscheidung von organischen Beschichtungen auf metallischen Oberflächen, vorzugsweise Eisenoberflächen, geeignet ist. Die Reduzierung der Ionenstärke, insbesondere der Konzentration an Eisen-Ionen, wird auch hier durchgeführt, um das Bindemittelsystem im autophoretischen Bad gegenüber Koagulation zu stabilisieren. Die DE 3431276 umgeht das Problem, das hohe Scherbeanspruchungen zu einer Koagulation der Lackbestandteile führen, dadurch, dass das Filtrat, also die wässrige Phase, die mit den störenden Ionen angereichert werden soll, umgewälzt wird, während die Dispersion selbst ionenaustauschenden Membranen des Filtermoduls nicht anströmt und mit diesen lediglich in Kontakt steht. Mit dieser Methode ist eine kontrollierte Reduzierung der Ionenfracht in der wässrigen Dispersion des Bindemittels möglich, jedoch muss das Filtermodul zur Entfernung von Bindemittelpartikeln auf den Membranoberflächen regelmäßig rückgespült werden, um eine gleich bleibende Trennleistung zu gewährleisten.

Die WO 02/18029 offenbart ein Verfahren zur selektiven Abtrennung polyvalenter Kationen aus einem autophoretischen Bad enthaltend ein in Wasser dispergiertes organisches Bindemittel, das in Gegenwart von polyvalenten Kationen der Elemente Eisen und Zink zur schnellen Koagulation neigt. Gemäß diesem Verfahren wird ein saurer selektiver Kationenaustauscher mit dem mit polyvalenten Kationen angereichertem Bad beschickt und so eine Reduzierung der Ionen erzielt. Der Kationenaustauscher muss in regelmäßigen Abständen regeneriert werden.

Die EP 1 000 654 A2 und die US 4 804 451 A offenbaren einen im Wesentlichen baugleichen plattenförmigen Laminar-Spacer zur Elektrodialyse, wobei zur Anströmung der Membranen mit einem zu trennenden Medium im Spacer wenigstens eine sich von einem Einlass zu einem Auslass erstreckende linienförmige Ausnehmung mit zumindest teilweise gekrümmtem Verlauf vorgesehen ist und die linienförmige Ausnehmung bei aufgelegter Membran einen rohrförmigen, geschlossenen Strömungskanal bildet, wobei die linienförmige Ausnehmung als die beiden Membranauflageflächen miteinander verbindender linienförmiger Durchbruch ausgebildet und der rohrförmige geschlossene Kanal bei aufgelegten Membranen zweiseitig von Membranen begrenzt ist.

Die US 4 600 493 A stellt sich die Aufgabe, ein Elektrodialyseverfahren zur Entfernung unerwünschter Nebenprodukte und zur Wiederherstellung von Alkalität in Bädern zur stromlosen Kupferabscheidung bereitzustellen. In den Segmenten der Elektrodialyseeinheit, die von der zu regenerierenden Badlösung durchströmt werden, werden zu diesem Zweck gezielt Turbulenzen eingeführt.

Die Aufgabe der vorliegenden Erfindung besteht darin ein alternatives Verfahren zur Reduzierung von Ionenstärke oder der Konzentration polyvalenter Ionen in einer wässrigen Dispersion von organischem Bindemittel und/oder anorganischem Festkörper bereitzustellen, bei dem die Konzentration bestimmter polyvalenter Kationen oder Anionen in der wässrigen Dispersion effektiv reduziert werden kann, ohne dass dispergierte Aktivkomponenten gleichsam unwiderruflich entfernt werden. Das Verfahren soll geeignet sein, um im kontinuierlichen Betrieb eines Verfahrens zur Oberflächenbehandlung eingesetzt werden zu können, wobei die Reduzierung der Ionenstärke oder der Konzentration bestimmter polyvalenter Ionen mit möglichst geringem Wartungsaufwand durchgeführt werden soll. Das Verfahren soll insbesondere geeignet sein, um in sauren wässrigen Abscheidebädern enthaltend dispergierte organische Bindemittel, die autophoretisch eingestellt sind, die Konzentration der die Koagulation des Bindemittels potentiell hervorrufenden polyvalenten Ionen, insbesondere der Eisen-Ionen, Zink-Ionen und Aluminium-Ionen, effektiv zu regulieren.

Diese Aufgabe wird gelöst durch das Elektrodialyse-Verfahren, des Anspruchs 10.

Im Sinne der vorliegenden Erfindung sind solche polyvalenten Ionen störend, die in der Badflüssigkeit bei Überschreiten einer Schwellenkonzentration die Güte des Bades bezogen auf den jeweiligen Anwendungszweck herabsetzen. Störende polyvalente Ionen sind demnach in Badflüssigkeiten enthaltend organische Bindemittel und/oder anorganische Feststoffe stets koagulierend wirkende Ionen.

Als Kationenaustauscher oder Anionenaustauscher gelten erfindungsgemäß polymere Materialien mit ionogenen funktionalen Gruppen und frei beweglichen Gegenionen, bei denen das Verhältnis von Kationen zu Anionen beziehungsweise von Anionen zu Kationen im Ionenaustauscher jeweils bezogen auf die frei beweglichen Gegenionen größer als 1 ist.

Das erfindungsgemäße Verfahren ermöglicht aufgrund der ausschließlichen Verwendung von selektiv ionenaustauschenden Membranen gleicher Art, die jeweils auf der einen Seite von der Badflüssigkeit und auf der anderen Seite vom wässrigen Konzentrat umströmt werden, dass eine Migration der störenden polyvalenten Kationen oder Anionen aus der Badflüssigkeit in das wässrige Konzentrat stattfindet, wobei eine Anreicherung der störenden polyvalenten Ionen im Konzentrat erreicht wird. Ebenso wird eine Anreicherung störender polyvalenten Kationen unmittelbar in demjenigen wässrigen Elektrolyten erzielt, der mit dem als Kathode geschalteten Stromabnehmer in Kontakt steht, während störende polyvalente Anionen unmittelbar in demjenigen Elektrolyten angereichert werden, der mit dem als Anode geschalteten Stromabnehmer in Kontakt steht. Gleichzeitig wird durch die ausschließliche Verwendung von selektiv ionenaustauschenden Membranen gleicher Art vermieden, dass die dispergierten Bestandteile aufgrund ihrer zur Ladung der störenden polyvalenten Ionen meist entgegengesetzten Oberflächenladung an den Membranoberflächen koagulieren.

Gleichzeitig liegt im erfindungsgemäßen Verfahren bedingt durch die laminare Anströmung der Ionenaustauschermembranen mit der Badflüssigkeit eine sehr moderate Scherbeanspruchung innerhalb des Zellpakets vor. Eine durch Scherbeanspruchung der Badflüssigkeit induzierte Koagulation der dispergierten Feststoffanteile wird auf diese Weise ebenfalls vermieden, so dass weder Koagulat ins Bad gelangt noch das Zellpaket in den Segmenten, in denen die Badflüssigkeit strömt, verblockt.

Die laminare Anströmung der Membranen von der Badflüssigkeit ist erfindungsgemäß dadurch charakterisiert, dass die Badflüssigkeit außerhalb einer laminaren Grenzschicht dem Verlauf der Membran folgt und die Strömung dabei nicht abreißt oder verwirbelt. Hierfür liegt die Bedingung erfüllt vor, dass das Verhältnis von mittlerer Fließgeschwindigkeit der Badflüssigkeit in Metern pro Sekunde innerhalb der von der Badflüssigkeit mit den Teilvolumenströmen $\delta_i(V_B)$ durchströmten Segmenten des Zellpakets zur Beabstandung der Membranen in Richtung ihrer Flächennormalen innerhalb dieser Segmente in Meter kleiner als 100, vorzugsweise kleiner als 20 ist.

Die mittlere Fließgeschwindigkeit ist vorzugsweise aus dem jeweiligen Teilvolumenstrom $\delta_i(V_B)$, der maximalen Breite des vom Membranabstandshalter begrenzten Innenraums des jeweiligen Segments orthogonal zur Fließrichtung und einem Volumenfaktor wie folgt theoretisch zu berechnen:

$$v = \frac{\delta_i(V_B)}{d \cdot l \cdot x(V_B)}$$

V:  mittlere Fließgeschwindigkeit der Badflüssigkeit [m/s]

$\delta_i(V_B)$:  Teilvolumenstrom der Badflüssigkeit innerhalb des Segments [m³/s]

d:  Beabstandung der Membranen des Segments in Richtung ihrer Flächennormalen [m]

l:  maximale Breite des vom Membranabstandshalter begrenzten Innenraums des jeweiligen Segments orthogonal zur Fließrichtung und orthogonal zur Flächennormalen der vom Segment beabstandeten Membranen [m]

$x(V_B)$:  Segmentvolumenfaktor, der den Anteil an freiem fluiddurchlässigen Volumen innerhalb des vom jeweiligen Teilvolumenstrom $\delta_i(V_B)$ durchströmten Segments angibt [$0 < x(V_B) \leq 1$]

Die Segmente des Zellpakets sind, die durch unmittelbar benachbarte Membranen und den Membranabstandshalter begrenzten Raumvolumina ("Segmentvolumina"), innerhalb derer die Teilvolumenströme $\delta_i(V_B)$ oder $\delta_i(V_K)$ getrennt voneinander fließen.

Die Badflüssigkeit besitzt in dem erfindungsgemäßen Verfahren bei 20°C vorzugsweise eine dynamische Viskosität bei der jeweiligen Temperatur der Badflüssigkeit von zumindest 0,8 mPas und nicht mehr als 20 mPas, während die Strömung der Badflüssigkeit orthogonal zur Flächennormalen der Membranen des Zellpakets mit einer mittleren Fließgeschwindigkeit von vorzugsweise nicht mehr als 0,1 m/s, besonders bevorzugt von nicht mehr als 0,01 m/s erfolgt.

In einem bevorzugten Verfahren liegt zudem folgende Bedingung innerhalb der von der Serie der Membranen gebildeten Segmente des Zellpakets erfüllt vor: $\dfrac{d_B^2 \cdot x(V_B) \cdot \delta_i(V_K)}{d_K^2 \cdot x(V_K) \cdot \delta_i(V_B)}$ ist größer als 3, vorzugsweise größer als 4, wobei

$\delta_i(V_B)$:      der Teilvolumenstrom der Badflüssigkeit innerhalb des Segments [$m^3/s$],

$\delta_i(V_K)$:      der Teilvolumenstrom des Konzentrats innerhalb des Segments [$m^3/s$],

$d_B$, $d_K$:      die Beabstandung der Membranen des jeweiligen Segments in Richtung ihrer Flächennormalen [m] und

$x(V_K; V_B)$:      der Segmentvolumenfaktor, der den Bruchteil an freiem fluiddurchlässigen Volumen innerhalb des jeweiligen durchströmten Segments angibt [$0 < x(V_K; V_B) \leq 1$], ist.

Ist diese Bedingung zusätzlich erfüllt, so resultiert eine im Vergleich zur Laminarströmung in den Segmenten, die von der Badflüssigkeit durchströmt werden, wesentlich stärkere Strömung in den vom Konzentrat durchströmten Segmenten des Membranstapels. Aufgrund der derart erhöhten Konvektion in den vom Konzentrat durchströmten Segmenten wird eine schnelle Durchmischung des Segmentvolumens erreicht und der Stofftransport in Stapelrichtung der Membranen erhöht.

In einem bevorzugten erfindungsgemäßen Verfahren bewirkt die Spannung, die an den Stromabnehmer des Zellpakets angelegt wird, dass eine Stromdichte von zumindest 0,1 $mAcm^{-2}$, vorzugsweise zumindest 1 $mAcm^{-2}$, jedoch vorzugsweise nicht mehr als 10 $mAcm^{-2}$ resultiert.

Des Weiteren ist es bevorzugt, dass eine gleichgerichtete elektrische Spannung an die Stromabnehmer angelegt wird und keine Umpolung während des Verfahrens erfolgt, wobei die Aufprägung der elektrischen Spannung besonders bevorzugt pulspotentiostatisch erfolgt, wobei die Pulsdauer, also die Dauer eines einzelnen Pulses, vorzugsweise im Bereich von 0,5 bis 50 Sekunden, besonders bevorzugt im Bereich von 0,8 bis 2 Sekunden, und die Pulsruhephase, also die Phase zwischen zwei Pulsen während der keine Spannung an die Stromabnehmer angelegt ist, vorzugsweise im Bereich von 0,2 bis 10 Sekunden, besonders bevorzugt im Bereich von 0,4 bis 1 Sekunden liegt. Die zeitweise Aufprägung einer gleichgerichteten Spannung erbringt den Vorteil, dass die in der Badflüssigkeit dispergierten Feststoffanteile, die aufgrund ihrer Migration im elektrischen Feld an von der Badflüssigkeit angeströmten Membranen akkumuliert werden, bei Wegfall der elektrischen Spannung im Strömungsfeld abtransportiert werden können, so dass eine mögliche Koagulation der dispergierten Feststoffe und eine damit verbundene Verblockung der Membran verhindert wird.

In einem bevorzugten erfindungsgemäßen Verfahren sind die Stromabnehmer flächig ausgebildet und stehen ausschließlich auf ihren Innenflächen, die dem Membranstapel zugewandt sind, mit dem Elektrolyt in Kontakt, besonders bevorzugt sind die Stromabnehmer dabei dimensionsgleich zu den Membranen des Stapels des Zellpakets ausgestaltet.

Die Membranen sind im erfindungsgemäßen Verfahren vorzugsweise als Rechtecksflächen ausgebildet, wobei die Seiten der Rechtecksflächen vorzugsweise zumindest 0,05 m lang sind, jedoch vorzugsweise nicht länger als 1,0 m.

Die Stromabnehmer können unter anderen aus korrosionsbeständigen Legierungen wie Nickel-Molybdän-Legierungen (Hastelloy®) gefertigt werden oder stellen Platin- oder Graphit-kaschierte metallische oder metallisch leitfähige Trägermaterialien dar. Neben der Korrosionsbeständigkeit und Abriebfestigkeit des Elektrodenmaterials erfordert eine wirtschaftliche Verfahrweise, dass die Elektrodenmaterialien für die entsprechende elektrochemische Teilreaktion zur Zersetzung des Elektrolyten eine möglichst niedrige Überspannung aufweisen sollten und die Stromabnehmer daher im Kontaktbereich mit dem wässrigen Elektrolyten und/oder dem wässrigen Konzentrat häufig mit Edelmetallen der Elemente Platin, Ruthenium und/oder Iridium beschichtet sind.

In einer bevorzugten Ausführungsform des erfindungsgemäßen Verfahrens wird aus einem Elektrolytreservoir bevorratend den wässrigen Elektrolyten ein Volumenstrom $V_E$ des wässrigen Elektrolyten in das Zellpaket eingespeist, der innerhalb des Zellpakets in Teilvolumenströme $\delta_i(V_E)$ zerfällt, die orthogonal zur Flächennormalen der äußeren Membranen des Membranstapels durch die von den Stromabnehmern und den unmittelbar benachbarten äußeren Membranen gebildeten Segmente des Zellpakets hindurchströmen, wobei die Teilvolumenströme $\delta_i(V_E)$ nach Durchlaufen der Segmente vorzugsweise innerhalb des Zellpakets vereinigt und vorzugsweise zumindest teilweise in das Elektrolytreservoir überführt werden. In dieser bevorzugten Ausführungsform werden also insgesamt drei voneinander getrennte Volumenströme $V_B$, $V_K$ und $V_E$ unabhängig voneinander in das Zellpaket eingespeist und zerfallen dort in jeweils orthogonal zur Stapelrichtung verlaufende Teilvolumenströme. Diese Ausführungsform ermöglicht, dass der elektrolytische Prozess aufgrund der getrennten Volumenströme von Konzentrat und Elektrolyt unabhängig vom Konzentrat optimiert werden, so dass beispielsweise niedrige Zersetzungsspannungen realisiert werden können. Weiterhin ist von Vorteil, dass der Elektrolyt unabhängig vom Konzentrat ausgetauscht oder regeneriert werden kann.

Zudem ist es in einem erfindungsgemäßen Verfahren zur Reduzierung störender polyvalenter Ionen in einer Badflüssigkeit bevorzugt, in den Anolyten und den Katholyten getrennt voneinander einen Volumenstrom $V_E$ jeweils eines wässrigen Elektrolyten in das Zellpaket einzuspeisen, um auf diese Weise den Anolyt und Katholyt unabhängig voneinander austauschen oder regenerieren zu können. Dies erbringt den Vorteil, dass aufgrund der Trennung der Stoffkreisläufe von Katholyten und Anolyten kein stationärer Zustand bezogen auf die Konzentration der störenden polyvalenten Ionen innerhalb der Segmente des Membranstapels erreicht wird, da entweder der Katholyt bei erfindungsgemäßer Verwendung von Kationenaustauschern oder der Anolyt bei Verwendung von Anionenaustauschern eine Senke für die polyvalenten Kationen bzw. Anionen darstellt, so dass die Konzentration der jeweiligen störenden polyvalenten Kationen oder Anionen im Katholyten bzw. Anolyten stetig ansteigt, während sie in allen übrigen Segmenten des Membranstapels stetig abnimmt.

In einer alternativen, verfahrenstechnisch weniger aufwendigen Ausführungsform des erfindungsgemäßen Verfahrens wird kein wässriger Elektrolyt zusätzlich in das Zellpaket eingespeist und der Membranstapel besteht ausschließlich aus Membranen der Serie von Membranen, innerhalb derer jede Membran einseitig von der Badflüssigkeit laminar angeströmt wird und sich Segmente, die von der Badflüssigkeit durchströmt werden mit Segmenten, die vom wässrigen Konzentrat durchströmt werden, abwechseln. In dieser Ausführungsform werden folglich ausschließlich die Volumenströme $V_B$ und $V_K$ in das Zellpaket eingespeist.

Das erfindungsgemäße Verfahren reduziert sich für diesen bevorzugten Fall folglich zu einem Elektrodialyse-Verfahren zur Reduzierung störender polyvalenter Ionen in einem wässrigen Bad,

- bei dem ein Volumenstrom $V_B$ der Badflüssigkeit enthaltend ein dispergiertes organisches Bindemittel und/oder einen dispergierten anorganischen Feststoff sowie polyvalente Kationen und/oder polyvalente Anionen aus dem Bad enthaltend die Badflüssigkeit und ein Volumenstrom $V_K$ eines wässrigen Konzentrates aus einem Konzentratreservoir bevorratend das Konzentrat in ein Zellpaket zur Elektrodialyse umfassend einen Membranstapel, der für den Fall, dass störende polyvalente Kationen in der Badflüssigkeit enthalten sind, ausschließlich Kationenaustauscher, und für den Fall, dass störende polyvalente Anionen in der Badflüssigkeit enthalten sind, ausschließlich Anionenaustauscher umfasst, und elektrisch leitfähige Stromabnehmer, die den Membranstapel beidseitig in Stapelrichtung begrenzen, eingespeist werden,
- bei dem die Volumenströme $V_B$ und $V_K$ innerhalb des Zellpakets in Teilvolumenströme $\delta_i(V_B)$ und $\delta_i(V_K)$ zerfallen, die räumlich voneinander getrennt orthogonal zur Flächennormalen der Membranen des Membranstapels durch die von unmittelbar benachbarten und voneinander beabstandeten Membranen dieser Serie gebildeten Segmente hindurchströmen, wobei sich Segmente, durch die lediglich ein Teilvolumenstrom $\delta_i(V_B)$ der Badflüssigkeit hindurchströmt, mit solchen Segmenten, durch die lediglich ein Teilvolumenstrom $\delta_i(V_K)$ des Konzentrats hindurchströmt, in Stapelrichtung abwechseln, wobei die Badflüssigkeit innerhalb der Segmente benachbarte Membranen laminar anströmt,
- bei dem jede der äußeren Membranen des Membranstapels auf der dem unmittelbar benachbartem Stromabnehmer zugewandten Seite mit einem Teilvolumenstrom $\delta_i(V_K)$ des wässrigen Konzentrats angeströmt wird,
- bei dem zeitweise oder dauerhaft eine elektrische Spannung an die elektrisch leitfähigen Stromabnehmer angelegt wird, die mit dem wässrigen Konzentrat in Kontakt stehen, wobei die elektrische Spannung hinreichend groß ist, um die elektrolytische Zersetzung des wässrigen Konzentrats herbeizuführen,
- und bei dem die Teilvolumenströme $\delta_i(V_B)$ der Badflüssigkeit nach Durchlaufen des Membranstapels vereinigt und in das wässrige Bad zurückgespeist werden, während die Teilvolumenströme $\delta_i(V_K)$ des wässrigen Konzentrats nach Durchlaufen des Membranstapels vereinigt und zumindest teilweise in das Konzentratreservoir überführt werden.

Bei dieser Verfahrensführung verläuft die Aufkonzentrierung in den vom Konzentrat durchströmten Segmenten des Membranstapels und die Verarmung in den von der Badflüssigkeit durchströmten Segmenten des Membranstapels bezogen auf eine oder mehrere Kationen- bzw. Anionensorten bis zum Erreichen eines stationären Zustands. Mit dieser vergleichsweise mäßigen, aber alle vom Konzentrat durchströmten Segmente des Membranstapels betreffenden Aufkonzentrierung ist der spezifische Vorteil verbunden, dass bei einem erfindungsgemäßen Verfahren zur Reduzierung von polyvalenten Kationen in einer Badflüssigkeit eine Ausfällung von schwerlöslichen Hydroxiden im Katholyten verfahrensbedingt weitgehend unterbunden werden kann.

Die Teilvolumenströme $\delta_i(V_B)$, $\delta_i(V_K)$ und $\delta_i(V_E)$, die orthogonal zur Stapelrichtung der Membranen verlaufen und die einzelnen vom Membranstapel aufgespannten Segmente des Zellpakets durchströmen, sind in einer bevorzugten Ausführungsform des erfindungsgemäßen Verfahrens gleichgerichtet, das heißt sie durchströmen die Segmente des Membranstapels in einer gemeinsamen Richtung.

Der wässrige Elektrolyt und das wässrige Konzentrat haben im erfindungsgemäßen Verfahren vorzugsweise eine spezifische elektrische Leitfähigkeit von zumindest 1mScm$^{-1}$, besonders bevorzugt von zumindest 10 mScm$^{-1}$.

Vorzugsweise liegt die Konzentration einer störenden polyvalenten Ionensorte im Konzentrat eines erfindungsgemäßen Verfahrens unterhalb einer kritischen Konzentration. Die kritische Konzentration einer störenden polyvalenten Ionensorte im wässrigen Konzentrat ist die Konzentration derselben störenden polyvalenten Ionensorte in der Badflüs-

sigkeit multipliziert mit dem Verhältnis der Summe der Produkte aus Ladungszahl, Konzentration und Ionenbeweglichkeit aller übrigen, zur störenden Ionensorte gleich geladenen Ionensorten im Konzentrat zur Summe der Produkte aus Ladungszahl, Konzentration und Ionenbeweglichkeit aller übrigen, zur störenden Ionensorte gleich geladenen Ionensorten in der Badflüssigkeit. Für die kritische Konzentration an störenden polyvalenten Ionen gilt demnach folgender Zusammenhang:

$$c_s^{krit}(K) = c_s(B) \cdot \frac{\sum\limits_{i \neq s} z_i\, u_i\, c_i(K)}{\sum\limits_{j \neq s} z_j\, u_j\, c_j(B)}$$

$c_s^{krit}(K):$    kritische Konzentration der störenden polyvalenten Ionensorte im Konzentrat [mol/l]

$c_s(B):$    Konzentration der störenden polyvalenten Ionensorte in der Badflüssigkeit [mol/l]

$z_i\, u_i\, c_i(K):$    Produkte aus Ladungszahl, Ionenbeweglichkeit und Konzentration einer zur störenden Ionensorte gleich geladenen Ionensorte i im Konzentrat

$z_j\, u_j\, c_j(B):$    Produkte aus Ladungszahl, Ionenbeweglichkeit und Konzentration einer zur störenden Ionensorte gleich geladenen Ionensorte j in der Badflüssigkeit

$z_i, z_j:$    Ladungszahl der Ionensorten i, j

$u_i, u_j:$    Ionenbeweglichkeit der Ionensorten i, j [$m^2 s^{-1} V^{-1}$]

$c_i, c_j:$    Konzentration der Ionensorten i, j [mol/l]

Oberhalb dieser kritischen Konzentration einer störenden polyvalenten Ionensorte im Konzentrat ist eine Reduzierung des Anteils derselben Ionen in der Badflüssigkeit in einem erfindungsgemäßen Verfahren nicht effektiv. In einem bevorzugten erfindungsgemäßen Verfahren und insbesondere in einem Verfahren, bei dem der Elektrolyt mit dem Konzentrat identisch ist, wobei der Membranstapel ausschließlich Membranen aus der Serie der Membranen enthält und ausschließlich die Volumenströme $V_B$ und $V_K$ in das Zellpaket eingespeist werden, werden daher Teilvolumina des Konzentrates kontinuierlich oder diskontinuierlich durch Konzentrat-Lösung ersetzt, die keine störenden polyvalenten Ionen enthält und vorzugsweise eine wässrige Lösung mit einer elektrischen Leitfähigkeit von zumindest 1 mScm$^{-1}$ ist, oder störende polyvalente Ionen werden durch Ausfällung und Filtration des Konzentrates entfernt, um zu gewährleisten, dass die Anteile der störenden polyvalenten Ionen im Konzentrat nicht oberhalb ihrer jeweiligen kritischen Konzentration liegen. Dabei wird vorzugsweise so verfahren, dass der Anteil an störenden polyvalenten Ionen im Konzentrat analytisch überwacht wird, um das Konzentrat bei Annäherung an die kritische Konzentration mit frischer Konzentrat-Lösung zumindest teilweise zu ersetzen oder um ein Reagenz zur Ausfällung der störenden polyvalenten Ionen hinzuzudosieren, so dass die Konzentration der störenden polyvalenten Ionen im Konzentrat die jeweilige kritische Konzentration nicht übersteigt.

Im erfindungsgemäßen Verfahren ist es bevorzugt, dass der Ladungstransport im Konzentrat überwiegend durch Hydronium-Ionen oder Hydroxid-Ionen erfolgt, da diese Ionen in wässrigen Lösungen die höchste Ionenbeweglichkeit besitzen und damit die kritische Konzentration der störenden polyvalenten Ionen im Konzentrat einen vergleichsweise hohen Wert annimmt, so dass eine effektive Reduzierung der jeweiligen störenden polyvalenten Ionensorte in der Badflüssigkeit erfolgen kann.

Zur Entfernung störender polyvalenter Kationen aus einer Badflüssigkeit besitzt das Konzentrat vorzugsweise einen pH-Wert unterhalb von 3, besonders bevorzugt unterhalb von 2, jedoch liegt der pH-Wert zur Vermeidung der Degradation der Kationenaustauscher vorzugsweise nicht unterhalb von 0,5. Des Weiteren gilt, dass in einem Verfahren zur Entfernung störender polyvalenter Kationen aus einer Badflüssigkeit ein Verhältnis der pH-Werte von Badflüssigkeit zu wässrigen Konzentrat von größer als 1 bevorzugt ist, insbesondere ist der pH-Wert des Konzentrats um zumindest eine Einheit niedriger als derjenige in der Badflüssigkeit.

Der pH-Wert im Konzentrat wird in einem bevorzugten Verfahren zur Reduzierung der Konzentration an störenden polyvalenten Kationen in einer Badflüssigkeit vorzugsweise mit starken Säuren ausgewählt aus Schwefelsäure, Salzsäure, Perchlorsäure, Salpetersäure eingestellt, besonders bevorzugt wird Schwefelsäure zur Einstellung des pH-Wertes verwendet. Analog besitzt das Konzentrat in einem Verfahren zur Reduzierung der Konzentration an störenden polyvalenten Anionen in einer Badflüssigkeit vorzugsweise einen pH-Wert größer als 11, besonders bevorzugt größer als 12, jedoch liegt der pH-Wert zur Vermeidung der Degradation der Anionenaustauscher vorzugsweise nicht oberhalb von 13,5. Des Weiteren gilt analog, dass in einem Verfahren zur Reduzierung störender polyvalenter Anionen aus einer Badflüssigkeit ein Verhältnis der pH-Werte von Badflüssigkeit zu wässrigem Konzentrat von kleiner als 1 ist bevorzugt ist, insbesondere ist der pH-Wert des Konzentrats um zumindest eine Einheit größer als derjenige in der Badflüssigkeit.

Der pH-Wert im Konzentrat wird in einem bevorzugten Verfahren zur Reduzierung der Konzentration störender polyvalenter Anionen in einer Badflüssigkeit vorzugsweise mit Alkalien ausgewählt aus Natriumhydroxid, Kaliumhydroxid, Magnesiumhydroxid, Kalziumhydroxid, Ammoniak, eingestellt, besonders bevorzugt wird Natriumhydroxid zur Einstellung des pH-Wertes verwendet.

Durch diese Maßnahmen hinsichtlich der Acidität bzw. der Alkalinität des Konzentrats wird eine hohe Aufkonzentrierung der störenden polyvalenten Ionen im Konzentrat ermöglicht.

Die zuvor genannten bevorzugten Ausführungsformen erfindungsgemäßer Verfahren bezüglich der Zusammensetzung des Konzentrates bilden in analoger Weise angewandt auf die Zusammensetzung des Elektrolyten ebenfalls bevorzugte Ausführungsformen des erfindungsgemäßen Verfahrens bezüglich des Elektrolyten.

Eine verbesserte Aufkonzentrierung der störenden polyvalenten Ionen im Konzentrat kann auch dadurch erzielt werden, dass die von der Badflüssigkeit angeströmte Membranen des Membranstapels in Stapelrichtung abwechselnd selektiv durchlässig für mono- und polyvalente Ionen sind.

Ein erfindungsgemäß bevorzugtes Verfahren zur Reduzierung der Konzentration störender polyvalenter Kationen in der Badflüssigkeit zeichnet sich dabei dadurch aus, dass die Membranen der Serie von Membranen, innerhalb derer jede Membran einseitig von der Badflüssigkeit laminar angeströmt wird und die auf der der Kathode zugewandten Seite vom wässrigen Konzentrat angeströmt werden oder mit dem wässrigen Elektrolyten in Kontakt stehen, selektiv durchlässig für polyvalente Kationen, vorzugsweise störende polyvalente Kationen sind, während die Membranen der Serie von Membranen, innerhalb derer jede Membran einseitig von der Badflüssigkeit laminar angeströmt wird und die auf der der Anode zugewandten Seite vom wässrigen Konzentrat angeströmt werden oder mit dem wässrigen Elektrolyten in Kontakt stehen, selektiv durchlässig für monovalente Kationen sind.

Das analoge bevorzugte Verfahren zur Reduzierung der Konzentration störender polyvalenter Anionen in der Badflüssigkeit zeichnet sich dabei dadurch aus, dass die Membranen der Serie von Membranen, innerhalb derer jede Membran einseitig von der Badflüssigkeit laminar angeströmt wird und die auf der der Kathode zugewandten Seite vom wässrigen Konzentrat angeströmt werden oder mit dem wässrigen Elektrolyten in Kontakt stehen, selektiv durchlässig für monovalente Anionen sind, während die Membranen der Serie von Membranen, innerhalb derer jede Membran einseitig von der Badflüssigkeit laminar angeströmt wird und die auf der der Anode zugewandten Seite vom wässrigen Konzentrat angeströmt werden oder mit dem wässrigen Elektrolyten in Kontakt stehen, selektiv durchlässig für polyvalente Anionen, vorzugsweise störende polyvalente Anionen sind.

Selektiv durchlässige Ionenaustauschermembranen sind kommerziell erhältlich und basieren auf sogenannten Chelatharzen, die eine höhere Affinität zu bestimmten störenden polyvalenten Ionen oder bestimmten monovalenten Ionen im Konzentrat und Elektrolyten besitzen. In dieser bevorzugten Variante des erfindungsgemäßen Verfahrens wird erreicht, das bevorzugt polyvalente Ionen in das Konzentrat oder den Elektrolyten migrieren, umgekehrt jedoch die Migration aus dem Konzentrat oder Elektrolyten in die Badflüssigkeit gehemmt wird, so dass insgesamt eine verstärkte Aufkonzentration der polyvalenten Ionen im Konzentrat erfolgt.

Das erfindungsgemäße Verfahren ist besonders vorteilhaft, wenn die störenden polyvalenten Ionen der Badflüssigkeit eine zur Oberflächenladung der dispergierten Bestandteile der Badflüssigkeit entgegengesetzte Ladung aufweisen. An der Grenzfläche der erfindungsgemäß zu verwendenden Ionenaustauscher zur Badflüssigkeit entsteht dann ein elektrisches Membran-Potential ("Donnan-Potential"), das eine elektrostatische Abstoßung der dispergierten Bestandteile verursacht, so dass einer Verblockung der ionenaustauschenden Membranen durch Migration oder elektrostatisches Aufziehen der dispergierten Bestandteile entgegengewirkt wird. Dieser Effekt kommt also stets dann zum Tragen, wenn die Oberflächenladung der dispergierten Bestandteile negativ im Fall der erfindungsgemäßen Verwendung von kationenaustauschenden Membranen und positiv im Fall der erfindungsgemäßen Verwendung von anionenaustauschenden Membranen ist.

Bevorzugte erfindungsgemäße Verfahren betreffen daher einerseits die Entfernung von störenden polyvalenten Anionen aus Badflüssigkeiten enthaltend einen kationisch dispergierten Feststoffanteil und andererseits die Entfernung von störenden polyvalenten Kationen aus Badflüssigkeiten enthaltend einen anionisch dispergierten Feststoffanteil, wobei der Feststoffanteil vorzugsweise zumindest ein dispergiertes organisches Bindemittel und/oder zumindest einen dispergierten anorganischen Feststoff umfasst.

In diesem Zusammenhang sind daher insbesondere Verfahren zur Entfernung von störenden polyvalenten Anionen, beispielsweise von Phosphat-Ionen, aus Tauchlacken enthaltend ein kationisch dispergiertes organisches Bindemittelsystem, beispielsweise aus kathodischen Tauchlacken (KTL), und Verfahren zur Entfernung von störenden polyvalenten Kationen, beispielsweise von Zink-, Aluminium- und Eisen-Ionen, aus Tauchlacken enthaltend ein anionisch dispergiertes organisches Bindemittelsystem, beispielsweise aus anodischen Tauchlacken (ATL), bevorzugt.

Es hat sich zudem herausgestellt, dass das erfindungsgemäße Verfahren unter Verwendung eines Zellpakets bestehend aus ausschließlich Kationenaustauschern hervorragend für die Regeneration von autophoretischen Bädern geeignet ist, die saure wässrige Zusammensetzungen darstellen, die ein anionisch dispergiertes organisches Bindemittel sowie Eisen(III)-Ionen und vorzugsweise zusätzlich freie Fluorid-Ionen enthalten. Anionisch dispergierte organische Bindemittel besitzen ein negatives Zeta-Potential also eine negative Oberflächenladung. Typische autophoretische Bäder sind beispielsweise in den Publikationen US 7,138,444 B2 (Anspruch 11; Spalte 13, Zeile 43 bis Spalte 14, Zeile 28) und WO 2010/066785 (Seite 5, Zeile 10 bis Seite 6, Zeile 7; Seite 19, Zeilen 1-29) beschrieben, auf die hiermit explizit Bezug genommen wird, wobei insbesondere die dort offenbarten wasserlöslichen Bestandteile der autophoretischen Zusammensetzungen und ihre relativen Anteile zueinander prototypisch für die in der vorliegenden Erfindung aufzuarbeitenden Badflüssigkeiten sind.

In wässrigen Zusammensetzungen, die für die autophoretische Beschichtung von Metalloberflächen aus Eisen, Zink und Aluminium mit dem Bindemittelsystem eingestellt sind, findet in der verfahrenstechnischen Anwendung eine starke Anreicherung mit polyvalenten Kationen der Metalle Eisen, Zink und Aluminium aufgrund des Anbeizens der zu beschichtenden metallischen Oberflächen statt. Diese Anreicherung führt zu einer Destabilisierung des im autophoretischen Bad dispergierten Bindemittelsystems, so dass Grenzwerte für die Konzentration dieser polyvalenten Kationen in der Badflüssigkeit eingehalten werden müssen und diese polyvalenten Kationen störende Ionen im Sinne der vorliegenden Erfindung sind.

Zur Reduzierung des Anteils an polyvalenten Kationen in derartigen wässrigen autophoretischen Bädern, insbesondere zur Reduzierung des Anteils an Eisen-Ionen, Aluminium-Ionen und Zink-Ionen ist ein erfindungsgemäßes Verfahren besonders geeignet,

- bei dem ein Volumenstrom $V_B$ der Badflüssigkeit aus dem wässrigen Bad enthaltend die Badflüssigkeit und ein Volumenstrom $V_K$ eines wässrigen Konzentrates, das vorzugsweise weniger als die kritische Konzentration an Eisen-Ionen, Aluminium-Ionen oder Zink-Ionen enthält, aus einem Konzentratreservoir bevorratend das Konzentrat in ein Zellpaket zur Elektrodialyse enthaltend einen Membranstapel, der lediglich Kationenaustauscher umfasst und beidseitig in Stapelrichtung durch zwei elektrisch leitfähige Stromabnehmer begrenzt ist, eingespeist werden,
- bei dem die Volumenströme $V_B$ und $V_K$ innerhalb des Zellpakets in Teilvolumenströme $\delta_i(V_B)$ und $\delta_i(V_K)$ zerfallen, die räumlich voneinander getrennt orthogonal zur Flächennormalen einer Serie von Membranen des Membranstapels durch die von unmittelbar benachbarten und voneinander beabstandeten Membranen dieser Serie gebildeten Segmente hindurchströmen, wobei sich Segmente der Serie von Membranen, durch die lediglich ein Teilvolumenstrom $\delta_i(V_B)$der Badflüssigkeit hindurchströmt, mit solchen Segmenten der Serie von Membranen, durch die lediglich ein Teilvolumenstrom $\delta_i(V_K)$ des Konzentrats hindurchströmt, in Stapelrichtung abwechseln, wobei die Badflüssigkeit innerhalb der Segmente der Serie von Membranen benachbarte Membranen laminar anströmt,
- bei dem jede der äußeren Membranen des Membranstapels auf der dem unmittelbar benachbartem Stromabnehmer zugewandten Seite entweder mit einem wässrigen Elektrolyten in Kontakt steht, der durch das vom jeweiligen Stromabnehmer und der jeweiligen äußeren Membran gebildete Segment vom wässrigen Konzentrat und der Badflüssigkeit räumlich getrennt ist, oder ebenfalls mit einem Teilvolumenstrom $\delta_i(V_K)$ des wässrigen Konzentrats angeströmt wird,
- bei dem zeitweise oder dauerhaft eine elektrische Spannung an die elektrisch leitfähigen Stromabnehmer angelegt wird, die mit dem wässrigen Elektrolyten und/oder dem wässrigen Konzentrat in Kontakt stehen, wobei die elektrische Spannung hinreichend groß ist, um die elektrolytische Zersetzung des wässrigen Elektrolyten und/oder des Konzentrats herbeizuführen,
- und bei dem die Teilvolumenströme $\delta_i(V_B)$der Badflüssigkeit nach Durchlaufen des Membranstapels vereinigt und in das wässrige Bad zurückgespeist werden, während die Teilvolumenströme $\delta_i(V_K)$ des wässrigen Konzentrats nach Durchlaufen des Membranstapels vereinigt und zumindest teilweise in das Konzentratreservoir überführt werden.

Die bereits erwähnten bevorzugten Ausführungsformen für das erfindungsgemäße Verfahren zur Reduzierung der Ionenstärke oder der Konzentration bestimmter polyvalenter Ionen in einer wässrigen Dispersion von organischem Bindemittel und/oder anorganischem Festkörper gelten, insofern die Reduzierung der Konzentration von störenden polyvalenten Kationen in der Badflüssigkeit betroffen ist, unmittelbar auch für das vorgenannte bevorzugte Verfahren zur Reduzierung des Anteils an polyvalenten Kationen in autophoretischen Bädern.

Überraschenderweise konnte festgestellt werden, dass auch in autophoretischen Bädern enthaltend freie Fluorid-Ionen der Anteil an Eisen- und Aluminium-Ionen effektiv reduziert werden konnte, obwohl die genannten Kationen in der Badflüssigkeit zu einem wesentlichen Anteil als negativ geladene Fluorokomplexe vorliegen. Offensichtlich können im erfindungsgemäßen Verfahren auch solche störenden polyvalenten Ionen, die im chemischen Gleichgewicht mit entgegengesetzt geladenen Komplexen stehen, in zufrieden stellendem Maße aus der Badflüssigkeit entfernt werden.

In einem weiteren Aspekt betrifft die vorliegende Erfindung auch ein Zellpaket zur Elektrodialyse, das sich für das erfindungsgemäße Verfahren zur Reduzierung der Ionenstärke oder der Konzentration polyvalenter Ionen in einer wässrigen Dispersion von organischem Bindemittel und/oder anorganischem Festkörper eignet.

Ein solches Zellpaket zur Elektrodialyse umfasst einen Membranstapel bestehend aus einer Anzahl n von Membranen und n+1 flächig ausgebildeten Membranabstandshaltern, die jeweils einen Rahmen aufweisen, der einen orthogonal zur Stapelrichtung fluiddurchlässigen Innenraum begrenzt, wobei die n+1 Membranabstandshalter und die n Membranen in Stapelrichtung alternierend angeordnet sind, wobei sämtliche Membranen Kationenaustauscher oder sämtliche Membranen Anionenaustauscher darstellen und zumindest ein Teil der Membranabstandshalter, die keine äußeren Abstandshalter des Stapels sind, ausgewählt ist aus Membranabstandshaltern zur Laminarströmung, die so ausgestaltet sind, dass sie im Innenraum mit jeder der jeweiligen unmittelbar benachbarten Membranen eine Mehrzahl von voneinander beabstandeten linienförmigen Kontaktbereichen aufweisen, wobei die mit zumindest einer der unmittelbar benachbarten Membranen gebildeten linienförmigen Kontaktbereiche gleichgerichtet zu einander verlaufen und sich nicht kreuzen und der mittlere Abstand der linienförmigen Kontaktbereiche zueinander nicht kleiner als die Beabstandung der durch diese Membranabstandhalter voneinander getrennten Membranen in Richtung ihrer Flächennormalen ist.

Der Innenraum der Membranabstandshalter ist fluiddurchlässig im Sinne der vorliegenden Erfindung, wenn ein Fluid den Innenraum des Abstandshalters in zumindest einer Richtung orthogonal zur Stapelrichtung der Membranen gänzlich durchströmen kann.

Ein Membranabstandshaltern zur Laminarströmung ermöglicht erfindungsgemäß, dass ein Fluid mit einer dynamischen Viskosität von zumindest 0,8 mPas beim Durchströmen des Membranabstandshalters mit einer mittleren Fließgeschwindigkeit von nicht mehr als 0,1 m/s außerhalb einer laminaren Grenzschicht im Wesentlichen dem Verlauf der von dem Abstandshalter beabstandeten und unmittelbar benachbarten Membranen folgt und die Strömung dabei nicht abreißt oder verwirbelt, so dass eine stationäre Strömung innerhalb des Membranabstandhalters ausgebildet wird.

Diejenigen Membranabstandshalter, die keine äußeren Abstandshalter des Stapels sind, weisen im vom Rahmen begrenzten Innenraum erfindungsgemäß mit den jeweiligen unmittelbar benachbarten Membranen dann eine Mehrzahl von gleichgerichteten linienförmigen Kontaktbereichen auf, wenn jeder der linienförmigen Kontaktbereiche mit der jeweiligen Membran gedanklich durch Rotation um nicht mehr als 45°, vorzugsweise um nicht mehr als 20° gegenüber jedem einzelnen der übrigen Kontaktbereiche parallel ausgerichtet werden kann.

Das erfindungsgemäße Zellpaket zur Elektrodialyse zeichnet sich dadurch aus, dass er Membranabstandshalter zur Laminarströmung umfasst, die aufgrund ihrer linienförmigen Kontaktbereiche mit zumindest einer der beabstandeten Membranen und aufgrund der vorgesehenen minimalen Beabstandung dieser linienförmigen Kontaktbereiche zueinander ein gerichtetes Durchströmen eines Fluids mit nahezu homogenem Strömungsfeld ermöglichen, so dass ein Fluid mit einer dynamischen Viskosität von zumindest 0,8 mPas bei einer mittleren Fließgeschwindigkeit von nicht mehr als 0,1 m/s weder verwirbelt noch laminare Grenzschichten ausbildet, die sich weit in den fluiddurchlässigen Innenraum erstrecken. Die Verwendung eines solchen Zellpakets in einem erfindungsgemäßen Verfahren erbringt den Vorteil, dass die Badflüssigkeit beim Durchströmen der Membranabstandshalter zur Laminarströmung einer nur geringen Scherbeanspruchung ausgesetzt ist und die in der Badflüssigkeit dispergierten Feststoffanteile daher nicht zur Koagulation gebracht werden.

In diesem Zusammenhang wird ein Zellpaket bevorzugt, bei dem die Membranabstandshalter zur Laminarströmung die unmittelbar benachbarten Membranen in Stapelrichtung auf zumindest $10^{-3}$ m beabstanden, um bei mittleren Fließgeschwindigkeiten eines Fluids von nicht mehr als 0,1 m/s nur geringe Scherungskräfte innerhalb des Segments zuzulassen.

In einer bevorzugten Ausführungsform des Zellpakets sind die Membranabstandshalter zur Laminarströmung im Zellpaket entlang der Stapelung gleichartig ausgerichtet. Dementsprechend ist es bevorzugt, dass die Membranabstandshalter zur Laminarströmung im Zellpaket bezüglich ihrer im jeweiligen Innenraum linienförmigen, gleichgerichtet zu einander verlaufenden und sich nicht kreuzenden Kontaktbereiche gleichartig ausgerichtet sind. Die Membranabstandshalter zur Laminarströmung sind in der bevorzugten Ausrichtung, wenn jeder dieser linienförmigen Kontaktbereiche im Innenraum eines derartigen Abstandshalters gedanklich durch Rotation um nicht mehr als 45°, vorzugsweise um nicht mehr als 20° gegenüber jedem einzelnen linienförmigen Kontaktbereich der Innenräume der übrigen Membranabstandshalter zur Laminarströmung parallel ausgerichtet werden kann.

Die gleiche Ausrichtung der Membranabstandshalter zur Laminarströmung ermöglicht, dass die Teilvolumenströme $\delta_i(V_B)$ im erfindungsgemäßen Verfahren an jeweils gleichen Stellen des Zellpakets in das entsprechende Segment eingespeist werden können und entsprechend an jeweils gleichen Stellen des Zellpakets aus dem Segment herausströmen.

Ferner sind die Membranabstandshalter zur Laminarströmung im Zellpaket vorzugsweise so gestapelt, dass ihre im Innenraum linienförmigen, gleichgerichtet zu einander verlaufenden und sich nicht kreuzenden Kontaktbereiche, die sie zumindest mit einer der unmittelbar benachbarten Membranen aufweisen, entlang der Stapelung stets auf der gleichen Seite mit den unmittelbar benachbarten Membranen in Kontakt stehen. Durch diese bevorzugte Anordnung der Membranabstandshalter im Zellpaket kann im erfindungsgemäßen Verfahren eine optimale laminare Anströmung derjenigen Membran innerhalb der von der Badflüssigkeit durchströmten Segmente erzielt werden, in deren Oberflächennähe aufgrund des elektrischen Feldes eine Anreicherung der dispergierten Festoffanteile erfolgt, so dass eine Koagulation durch die niedrige Scherbeanspruchung in diesem Bereich effektiv unterdrückt werden kann. Beispielsweise reichern sich anionisch dispergierte Bindemittelbestandteile auf der der Anode zugewandten Seite der Membranen innerhalb der von der Badflüssigkeit durchströmten Segmente an, so dass bereits eine optimierte Strömung nur an diesen Grenzflächen, die mit Hilfe der besonderen Ausgestaltung und Ausrichtung der Membranabstandshalter zur Laminarströmung herbeigeführt wird, eine Koagulation von Bindemittelbestandteilen in einem erfindungsgemäßen Verfahren unterbinden kann.

Selbstverständlich ist es generell bevorzugt, wenn jeder Membranabstandshalter zur Laminarströmung im Innenraum mit den jeweiligen beiden unmittelbar benachbarten Membranen eine Mehrzahl von voneinander beabstandeten linienförmigen Kontaktbereichen aufweist, wobei die jeweiligen linienförmigen Kontaktbereiche mit einer der unmittelbar benachbarten Membranen gleichgerichtet zu einander verlaufen und sich nicht kreuzen und der mittlere Abstand der jeweiligen linienförmigen Kontaktbereiche mit einer der unmittelbar benachbarten Membranen zueinander nicht kleiner als die Beabstandung der durch den jeweiligen Membranabstandhalter voneinander getrennten Membranen in Richtung ihrer Flächennormalen ist.

Ebenso sollten die Membranabstandshalter zur Laminarströmung im Innenraum möglichst wenig Kontaktbereiche mit den unmittelbar benachbarten Membranen aufweisen, die eine Verwirbelung beim Durchströmen mit einem Fluid entlang der linienförmigen Kontaktbereiche begünstigen. Folglich ist ein Zellpaket bevorzugt, bei dem die Membranabstandshalter zur Laminarströmung im Innenraum jeweils keine weiteren Kontaktbereiche anderer Art, beispielsweise punktförmige Kontaktbereiche, mit einer oder beiden der jeweiligen unmittelbar benachbarten Membranen aufweisen, deren mittlere Beabstandung zueinander kleiner als das zweifache der Beabstandung der unmittelbar benachbarten Membranen zueinander ist, und vorzugsweise jeweils keine weiteren Kontaktbereiche anderer Art mit den jeweiligen unmittelbar benachbarten Membranen aufweisen.

Bevorzugt ist insbesondere, dass die linienförmigen Kontaktbereiche der Membranabstandshalter zur Laminarströmung in einem erfindungsgemäßen Zellpaket geradlinig sind und vorzugsweise eine Länge von zumindest 50%, besonders bevorzugt von zumindest 80% der Erstreckung des Innenraums in Richtung des geradlinigen Kontaktbereiches aufweisen.

In einer bevorzugten Ausführungsform des Zellpakets folgen die Membranabstandshalter zur Laminarströmung entlang der Stapelrichtung nicht unmittelbar aufeinander, da bei Verwendung des Zellpakets in einem erfindungsgemäßen Verfahren Segmente, die von der Badflüssigkeit durchströmt werden, stets durch Segmente, die vom Konzentrat durchströmt werden, voneinander getrennt sind, so dass keine Notwendigkeit besteht das Zellpaket so auszustatten, dass sämtliche Membranen durch Abstandshalter zur Laminarströmung beabstandet werden. Es ist sogar vorteilhaft, diejenigen Segmente, die vom Konzentrat durchströmt werden, durch entsprechende Membranabstandshalter so auszugestalten, dass eine Verwirbelung des Konzentrats erreicht wird, um mit einer möglichst starken Konvektion innerhalb des Segments einerseits einen schnellen Stofftransport zu gewährleisten und andererseits die Ausdehnung von Konzentrationsgradienten zu minimieren.

Dementsprechend ist ein erfindungsgemäßes Zellpaket insbesondere bevorzugt, dass einen Membranstapel bestehend aus einer geraden Anzahl n von Membranen umfasst, wobei zumindest jeder in Stapelrichtung zweite Membranabstandshalter des Zellpakets, besonders bevorzugt nur jeder in Stapelrichtung zweite Membranabstandshalter des Zellpakets ein Membranabstandshalter zur Laminarströmung ist.

In einem bevorzugten Zellpaket, bei dem nur jeder in Stapelrichtung zweite Membranabstandshalter des Zellpakets ein Membranabstandshaltern zur Laminarströmung ist, liegt zudem folgende Bedingung für die Beabstandung der Membranen durch die Abstandshalter erfüllt vor: $\dfrac{d_L^2 \cdot x(V_L)}{d_I^2 \cdot x(V_I)}$ ist größer als 3, vorzugsweise größer als 4, wobei

$d_L$: die Beabstandung der Membranen durch Membranabstandshaltern zur Laminarströmung in Richtung der Flächennormalen der Membranen [m],

$d_I$: die Beabstandung der Membranen durch Membranabstandshaltern, die keine Abstandshalter zur Laminarströmung und keine äußeren Abstandshalter sind, in Richtung der Flächennormalen der Membranen [m], und

$x(V_I; V_L)$: der jeweilige Segmentvolumenfaktor, der den Bruchteil an freiem fluiddurchlässigen Volumen innerhalb des vom Membranabstandshalter und den unmittelbar benachbarten Membranen aufgespannten Segmentvolumens angibt [$0 < x(V_I; V_L) \leq 1$], ist. Das Segmentvolumen entspricht dem Volumen, das durch den Rahmen eines Membranabstandshalters und die unmittelbar benachbarten Membranen begrenzt wird. Damit ist das jeweilige Segmentvolumen gleich dem Volumen des Innenraums des entsprechenden Membranabstandshalters. Die Segmentvolumenfaktoren $x(V_I; V_L)$ sind bei Verwendung eines erfindungsgemäßen Zellpaktes in einem erfindungsgemäßen Verfahren mit den Segmentvolumenfaktoren $x(V_K; V_B)$ identisch.

Liegt diese zusätzliche Bedingung erfüllt vor, so wird im Segmentvolumen der Membranabstandshalter, die keine Abstandshalter zur Laminarströmung und keine äußeren Abstandshalter sind, eine schnelle Konvektion beim Durchströmen derselben mit einem Fluid begünstigt. Die schnelle Konvektion ist bei der Verwendung eines solchen Zellpakets in einem erfindungsgemäßen Verfahren wiederum vorteilhaft für eine effektive Durchmischung des Konzentrates in den Segmenten, die keine Membranabstandshalter zur Laminarströmung und keine äußeren Abstandshalter sind, bei gleichzeitig vorliegender Laminarströmung der Badflüssigkeit in den übrigen Segmenten des Zellpakets.

Ebenfalls ist bevorzugt, dass die Membranabstandshalter zur Laminarströmung im Zellpaket zueinander so angeordnet sind, dass eine gleichgerichtete Laminarströmung entlang der linienförmigen Kontaktbereiche aller Abstandshalter mit den jeweiligen unmittelbar benachbarten Membranen erfolgt. Auf diese Weise kann eine einheitliche Richtung der Teilvolumenströme durch diese Membranabstandshalter realisiert werden.

Ein erfindungsgemäßes Zellpaket ist insbesondere dann hervorragend geeignet, um in einem Verfahren zur Reduzierung der Ionenstärke in Badflüssigkeiten enthaltend einen dispergierten Feststoffanteil verwendet zu werden, wenn jeder Membranabstandshalter zur Laminarströmung in Stapelrichtung gleichartig zur einen Seite von einer Membran begrenzt wird, die selektiv durchlässig für polyvalente Ionen, und in Stapelrichtung gleichartig zur anderen Seite von einer Membran begrenzt wird, die selektiv durchlässig für monovalente Ionen ist.

Die Membranabstandshalter zur Laminarströmung sind in ihrem vom Rahmen begrenzten Innenraum vorzugsweise so ausgestaltet, dass sie eine Mehrzahl von beabstandet zueinander angeordneten Abstandselementen aufweisen, wobei zumindest ein Fixierelement vorgesehen ist, welches ein Abstandselement mit einem jeweils unmittelbar benachbarten Abstandselement verbindet, um eine Lagefixierung der Abstandselemente zueinander zu gewährleisten und wobei jedes Abstandselement einen Membrankontaktbereich zur linienförmigen Berührung entweder einer unmittelbar benachbarten bzw. beabstandeten Membran oder zwei gegenüberliegende Membrankontaktbereiche zur linienförmigen Berührung beider unmittelbar benachbarten bzw. beabstandeten Membranen aufweist, wobei alle Membrankontaktbereiche aller Abstandselemente zur linienförmigen Berührung nur einer der unmittelbar benachbarten Membranen orthogonal zur Stapelrichtung und gleichgerichtet zueinander verlaufen.

Die Abstandselemente sind dabei vorzugsweise als balkenförmige Stege ausgebildet, die durch ein oder mehrere Fixierelemente quer zur linienförmigen Ausrichtung der Stege miteinander verbunden sind.

Die Breite der linienförmigen Membrankontaktbereiche der Abstandselemente eines Membranabstandshalters zur Laminarströmung ist vorzugsweise nicht größer als $5 \cdot 10^{-3}$ m, besonders bevorzugt nicht größer als $10^{-3}$ m, aber beträgt vorzugsweise zumindest $2 \cdot 10^{-4}$ m.

Weiterhin ist bevorzugt, dass die Fixierelemente derart mit den Abstandselementen verbunden sind, dass die Fixierelemente der Membranabstandshalter im Innenraum keine

Membrankontaktbereiche zur linienförmigen Berührung zumindest einer der unmittelbar benachbarten Membran aufweisen, welche einen Kontaktbereich eines oder mehrerer der Abstandselemente kreuzen, aufweisen, und dass die Fixierelemente besonders bevorzugt keinen Membrankontaktbereich zur linienförmigen Berührung im Innenraum zumindest einer der unmittelbar benachbarten Membran aufweisen, insbesondere weisen die Fixierelemente keinen Membrankontaktbereich im Innenraum zur Berührung zumindest einer der unmittelbar benachbarten Membran auf.

Weiterhin sind erfindungsgemäß solche Zellpakete bevorzugt, bei denen die Abstandselemente der Membranabstandshalter zur Laminarströmung das Segmentvolumen bzw. den Innenraum der Abstandhalter zwischen zwei durch den Membranabstandshalter unmittelbar benachbarten bzw. beabstandeten Membranen in eine Mehrzahl kleinerer, orthogonal zur Stapelrichtung räumlich voneinander getrennter Einzelvolumina unterteilen.

Erfindungsgemäß sind Zellpakete bevorzugt, in denen jeder Membranabstandshalter zur Laminarströmung, einen Segmentvolumenfaktor $x(V_L)$ von zumindest 0,5, besonders von zumindest 0,75 aufweist.

Grundsätzlich sind solche Zellpakete bevorzugt, deren für den Stofftransport verfügbare Membranflächen maximal groß sind. Andererseits müssen die Membranabstandhalter zur Beabstandung unmittelbar benachbarter Membranen Kontaktbereiche mit diesen aufweisen. In einer weiteren bevorzugten Ausgestaltung des Zellpakets sind die Membranabstandshalters daher so ausgestaltet, dass die Kontaktflächen der Membrankontaktbereiche aller Abstandselemente im Innenraum des Abstandshalters mit einer der unmittelbar benachbarten Membranen in der Summe nicht mehr als 50% der durch den Rahmen des Abstandshalters jeweiligen eingefassten Membranfläche betragen.

Erfindungsgemäß sind Zellpakete bevorzugt, in denen jeder Membranabstandshalter der kein Membranabstandshalter zur Laminarströmung und kein äußerer Membranabstandshalter ist, einen Segmentvolumenfaktor $x(V_I)$ von weniger als 0,5, besonders bevorzugt von weniger als 0,25 aufweist. In einer besonders bevorzugten Ausführungsform des Zellpakets weisen alle Membranabstandshalter, die keine Membranabstandshalter zur Laminarströmung und keine äußeren Membranabstandshalter sind, eine Vielzahl von sich kreuzenden linienförmigen und/oder punktförmigen Kontaktbereichen mit einer der unmittelbar benachbarten Membranen auf, wobei die reziproke Flächendichte der Kreuzungspunkte und punktförmigen Kontaktbereiche auf den jeweiligen unmittelbar benachbarten Membranen kleiner als das 12fache, vorzugsweise kleiner als das 6fache der Beabstandung der unmittelbar benachbarten Membranen zum Quadrat ist. Hierdurch wird eine möglichst starke Durchmischung des durch diese Abstandshalter hindurchströmenden Fluids erzielt, wobei im Vergleich zum Strömungsfeld im Innenraum der Membranabstandshalter zur Laminarströmung hohe Scherbeanspruchungen resultieren. Derartige Membranabstandshalter, die keine Membranabstandshalter zur Laminarströmung und keine äußeren Membranabstandshalter des Zellpakets sind, sind vorzugsweise ausgewählt aus einem Vlies, Gewebe oder Gewirke, wobei die Fadenbreite vorzugsweise kleiner als $10^{-3}$ m, besonders bevorzugt kleiner als $2 \cdot 10^{-4}$ m ist und das Vlies, Gewebe oder Gewirke auch der Beabstandung unmittelbar benachbarter Membranen dient und Vlies, Gewebe oder Gewirke somit Kontaktbereiche mit beiden unmittelbar benachbarten Membranen aufweisen.

Der Rahmen der Membranabstandshalter dient der Begrenzung des Segmentvolumens und übernimmt damit im Zellpaket eine Dichtungsfunktion, indem das Herauslaufen von Fluiden, die den Innenraum der Abstandshalter durchströmen, aufgrund der Begrenzung des Teils der unmittelbar benachbarten Membranen, der mit dem Fluid in Kontakt stehen kann. Dementsprechend kann der flächig ausgebildete Rahmen zusätzlich eine dünne elastische Beschichtung aufweisen, die die Abdichtung des Zellpakets weiter verbessert.

Innenraum und Rahmen der Membranabstandshalter im erfindungsgemäßen Zellpaket können starr miteinander verbunden sein, so dass der Rahmen die Abstandselemente im fluiddurchlässigen Innenraum, die der Beabstandung und Kontaktierung der unmittelbar benachbarten Membranen dienen, bereits ausreichend oder zusätzlich stabilisiert. Der Rahmen kann demnach in einer solchen Ausgestaltung der Abstandshalter die Funktion eines Fixierelements übernehmen, so dass ggf. auf Fixierelemente im Innenraum des Abstandshalters verzichtet werden kann.

Innenraum und Rahmen der Membranabstandshalter im erfindungsgemäßen Zellpaket können jedoch auch zweiteilig gestaltet sein, so dass Rahmen und Strukturelemente des Innenraums der Abstandshalters einzelne Bauelemente des Zellpakets darstellen. Da der Rahmen den fluiddurchlässigen Innenraum begrenzt, werden die Strukturelemente, wie Abstands- und Fixierelemente, die im Innenraum des Abstandshalters zur Beabstandung und Kontaktierung der unmittelbar benachbarten Membranen dienen, bei einer zweiteiligen Ausgestaltung der Membranabstandshalter in die vom Rahmen vorgegebene Aussparung eingefügt.

Die Rahmen der Membranabstandshalter sind erfindungsgemäß so ausgestaltet und angeordnet, dass ein Teilvolumenstrom eines Fluids A, bspw. die Badflüssigkeit, durch den jeweiligen Innenraum des Abstandshalters und ein Fluid B, bspw. das Konzentrat, durch den Rahmen in Stapelrichtung hindurchströmen kann. Hierfür weist der Rahmen vorzugsweise jeweils an gegenüberliegenden Seiten einerseits Durchlassöffnungen, beispielsweise Bohrungen, und anderseits Verteilöffnungen, beispielsweise T-Bohrungen oder einfache Bohrungen mit Aussparung zum jeweiligen Innenraum des Abstandshalters, auf. Während durch die Durchlassöffnungen ein Fluid, ohne in den Innenraum des Abstandshalters zu gelangen, durch den Rahmen hindurchfließen kann, dienen die Verteilöffnungen dazu, dass ein Teilvolumenstrom eines Fluids durch den Innenraum des Abstandhalters hindurchfließen und auf der im Rahmen gegenüberliegenden und somit korrespondierenden Verteilöffnung desselben Abstandshalters aus dem Innenraum hinausströmen kann. Für die Anwendung des erfindungsgemäßen Zellpakets im erfindungsgemäßen Verfahren ist zur Trennung der Badflüssigkeit vom Konzentrat eine solche Ausgestaltung des Zellpakets bevorzugt, bei der die Rahmen der Membranabstandshalter in Stapelrichtung alternierend in der Weise angeordnet sind, dass Durchlassöffnung, beispielsweise einfache Bohrung, auf Verteilöffnung, beispielsweise T-Bohrung, und umgekehrt trifft. Die Membranen des Zellpakets besitzen dann im Kontaktbereich mit den Rahmen der Abstandshalter an den Stellen, an denen der Rahmen eine Durchlassöffnung oder eine Verteilöffnung aufweist, ebenfalls Durchlassöffnungen.

Die Membranabstandhalter im erfindungsgemäßen Zellpaket sind vorzugsweise aus einem Material gefertigt, dass bei Verwendung in einem erfindungsgemäßen Verfahren im wässrigen Konzentrat, wässrigen Elektrolyten und der wässrigen Badflüssigkeit nicht korrodiert, und daher besonders bevorzugt aus Kunststoff oder einem inerten Metall.

In einer bevorzugten Ausführungsform des Zellpakets liegen die Flächennormalen der Membranen und der Membranabstandshalter stets in Stapelrichtung. Eine solche Ausführungsform ist bei der Konstruktion des Zellpakets einfach zu realisieren und daher bevorzugt.

In einer weiteren Ausführungsform ist der Membranstapel des erfindungsgemäßen Zellpakets beidseitig in Stapelrichtung durch zwei elektrisch leitfähige Stromabnehmer, die auf den beiden äußeren Membranabstandshaltern aufliegen, begrenzt.

Zusätzlich ist bevorzugt, dass das der Membranstapel des erfindungsgemäßen Zellpakets derart ausgestaltet und in einem Gehäuse eingefasst ist, dass der Membranstapel orthogonal zur Stapelrichtung mit den Fluiden A und B durchströmt werden kann, wobei das Fluid A ausschließlich durch die von den Membranabstandshaltern zur Laminarströmung aufgespannten und durch unmittelbar benachbarte Membranen begrenzten Segmentvolumina strömt, ohne dass eine Durchmischung mit dem Fluid B innerhalb des Gehäuses erfolgt, das ausschließlich durch jeden anderen Membranabstandshalter aufgespannten und durch unmittelbar benachbarte Membranen begrenzten Segmentvolumina strömt.

Die elektrischen Stromabnehmer sind zumeist aus einem metallischen Material gefertigt und weisen vorzugsweise die gleiche Form wie die Membranen und Membranabstandshalter auf, besonders bevorzugt sind die Stromabnehmer ebenso wie die Membranen und Abstandshalter rechteckig und plattenförmig ausgebildet. Als metallische Materialien können unter anderen korrosionsbeständige Legierungen wie Nickel-Molybdän-Legierungen (Hastelloy®) oder Platin- oder Graphit-kaschierte metallische oder metallisch leitfähige Trägermaterialien eingesetzt werden. Neben der geforderten Korrosionsbeständigkeit und Abriebfestigkeit des Elektrodenmaterials bedingt eine wirtschaftliche Verfahrweise, dass die Elektrodenmaterialien für die entsprechende elektrochemische Teilreaktion zur Zersetzung des Elektrolyten eine möglichst niedrige Überspannung aufweisen sollten und die Stromabnehmer daher häufig mit Edelmetallen der Elemente Platin, Ruthenium und/oder Iridium beschichtet sind.

Die Erfindung wird folgend mit einzelnen Ausführungsbeispielen mit zugehörigen Figuren exemplarisch beschrieben. Dabei zeigt

Figur 1 einen schematischen Aufbau eines bevorzugten erfindungsgemäßen Zellpakets in aufgefächerter perspektivischer Ansicht;

Figur 2 eine schematische perspektivische Projektion eines Membranabstandhalters zur Laminarströmung eines bevorzugten erfindungsgemäßen Zellpakets nach Figur 1;

Figur 2a eine schematische Querschnittsansicht des Membranabstandshalters aus Figur 2 entlang der Ebene A-A;

Figur 3 eine schematische perspektivische Projektion eines Membranabstandhalters, der kein Abstandshalter zur Laminarströmung ist, des bevorzugten erfindungsgemäßen Zellpakets nach Figur 1;

Figur 4 eine schematische perspektivische Projektion einer Membran des bevorzugten Zellpakets nach Figur 1;

Figur 5 eine schematische perspektivische Projektion der das Zellpaket nach Figur 1 begrenzenden Stromabnehmer.

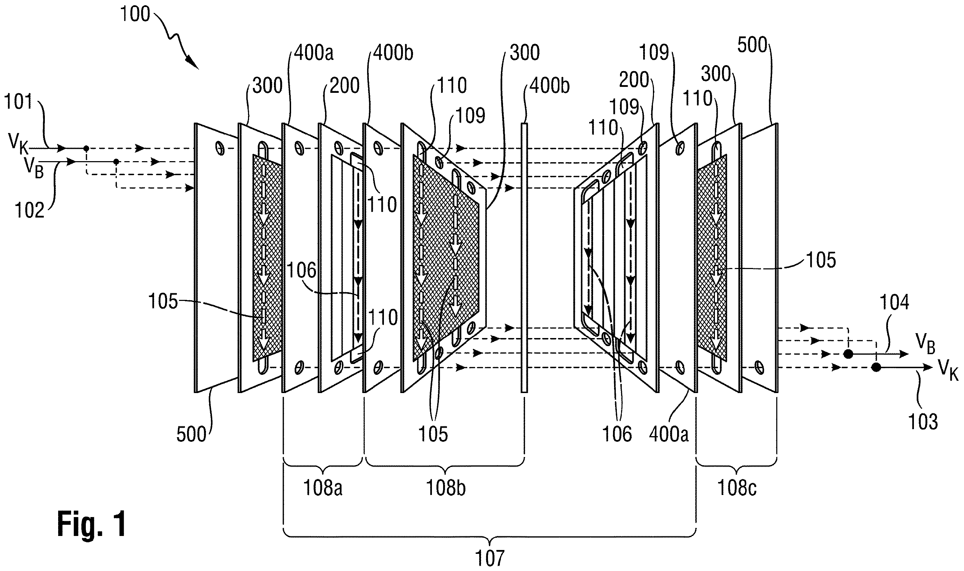

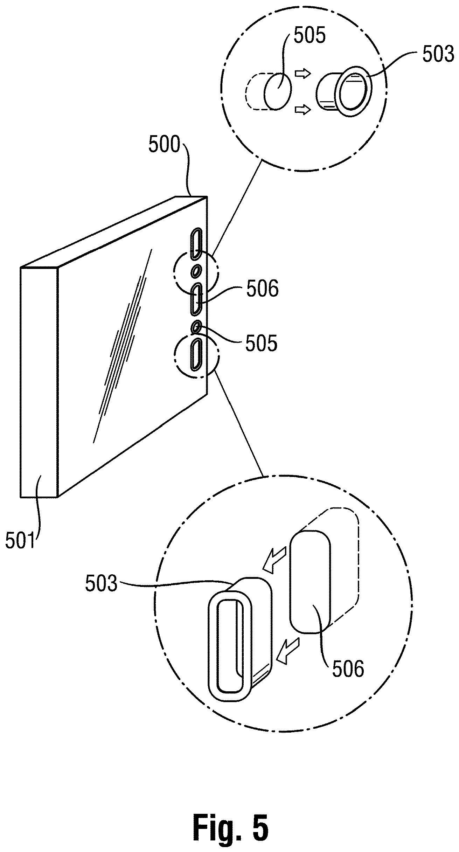

Figur 1 zeigt einen schematischen Aufbau eines bevorzugten erfindungsgemäßen Zellpakets 100 in aufgefächerter perspektivischer Ansicht. Das Zellpaket 100 umfasst eine Serie von Membranen 107, die durch Membranabstandshalter 200, 300 voneinander getrennt werden, wobei die jeweiligen Membranabstandshalter 200, 300 mit Membranen 400a, 400b, die unmittelbar benachbart sind, oder mit benachbarten Stromabnehmern 500, 500' Segmente 108a, 108b, 108c bilden. Jeder in Stapelrichtung zweite Membranabstandshalter 200, 300 des Zellpakets 100 ist ein Membranabstandshalter zur Laminarströmung 200. Das Zellpaket 100 ist in Stapelrichtung beidseitig durch Stromabnehmer 500 begrenzt, die aus Edelstahl mit der Werkstoffnummer 1.4401 gemäß Europäischer Norm bestehen (siehe Figur 5). Sämtliche Membranen 400a, 400b des Zellpakets 100 besitzen im Randbereich einfache Bohrungen 109 als Durchlassöffnungen, die das Durchströmen des Konzentrats und der Badflüssigkeit in Stapelrichtung ermöglichen. Entsprechend weisen sämtliche Membranabstandhalter 200, 300 entlang der Stapelung deckungsgleich mit den einfachen Bohrungen 109 der Membranen 400a, 400b und entlang der gegenüberliegenden Randbereiche der Membranabstandshalter 200, 300 abwechselnd Verteilelemente 110, die zusätzlich das Durchströmen der einzelnen Segmente 108a, 108b, 108c ermöglichen, und einfache Bohrungen 109 als Durchlassöffnungen auf, wobei in Stapelrichtung die Verteilelemente 110 eines Membranabstandshalters 300, 200 auf eine einfache Bohrung 109 der unmittelbar benachbarten Membranabstandshalter 200, 300 trifft und umgekehrt. In den beiden Stromabnehmern 500 befinden sich ebenfalls einfache Bohrungen 109 für den Einlass 101, 102 und den Auslass 103, 104 der beiden Volumenströme $V_K$ des Konzentrats und $V_B$ der Badflüssigkeit. In einem solchen erfindungsgemäßen Zellpaket 100 können demnach die Volumenströme $V_K$ und $V_B$ an den jeweiligen Einlässen 101, 102 am Stromabnehmer eingespeist werden, die sodann in den jeweiligen Segmenten 108 des Zellpakets 100 in die jeweiligen Teilvolumenströme $\delta_i(V_K)$ 105 und $\delta_i(V_B)$ 106 zerfallen, die wiederum innerhalb der Membranabstandshalter 200, 300 orthogonal zur Stapelrichtung zwischen mit Verteilelementen 110 versehenen benachbarten Randbereichen der Membranabstandshalter 200, 300 entlang der Membranen 400 verlaufen und anschließend vereinigt an den Auslässen 103, 104 als Volumenstrom $V_K$ und $V_B$ entnommen werden können, ohne dass im Zellpaket 100 eine Durchmischung der beiden Volumenströme $V_K$ und $V_B$ erfolgt. Sämtliche Teilvolumenströme $\delta_i(V_K)$ 105 durchströmen in dieser erfindungsgemäß bevorzugten Ausführungsform ausschließlich die Membranabstandshalter 300 der Segmente 108b, 108c, während sämtliche Teilvolumenströme $\delta_i(V_B)$ 106 ausschließlich die Membranabstandshalter zur Laminarströmung 200 der Segmente 108a des Zellpakets 100 durchströmen.

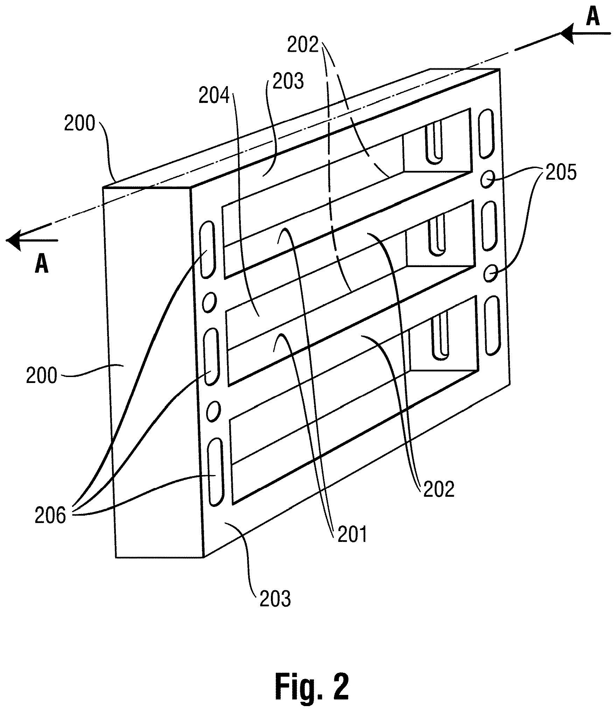

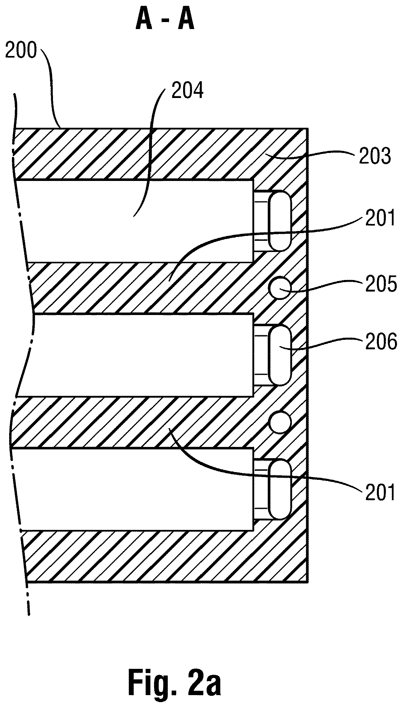

Figur 2 zeigt eine schematische perspektivische Projektion eines Membranabstandhalters zur Laminarströmung 200 eines bevorzugten erfindungsgemäßen Zellpakets 100 nach Figur 1. Der Membranabstandhalter zur Laminarströmung 200 weist einen Rahmen 203 und weitere im Innenraum 204 verlaufende Abstandselemente auf, die als Stege 201 mit jeweils geradlinigem Membrankontaktbereich 202 ausgebildet sind. Der Rahmen 203 dient in dieser Ausführung des Membranabstandhalters 200 sowohl zur Begrenzung des fluiddurchlässigen Innenraums 204 als auch als Fixierelement, welches die als Stege 201 ausgebildeten Abstandselemente miteinander verbindet. Auf gegenüberliegenden Seiten des Rahmens 203 des Membranabstandshalters zur Laminarströmung 200 sind jeweils abwechselnd einfache Bohrungen 205 als Durchlassöffnungen und T-Bohrungen 206 als Verteilelemente eingelassen, wobei die T-Bohrungen 206 so eingelassen sind, dass ein Teilvolumenstrom eines Fluids durch diese T-Bohrungen 206 in den vom Rahmen 203 begrenzten Innenraum 204 des Membranabstandshalters 200 hineinfließen und entlang der Stege 201 durch den Innenraum 204 hindurchfließen kann, um auf der jeweiligen gegenüberliegenden Seite des Rahmens 203 durch korrespondierende T-Bohrungen 206 aus dem Innenraum 204 hinauszufließen.

Figur 2a zeigt eine schematische Querschnittsansicht des Membranabstandshalters 200 aus Figur 2 entlang der Ebene A-A mit den im Rahmen befindlichen einfachen Bohrungen 205 und T-Bohrungen 206, die im Rahmen 203 des Membranabstandshalters 200, der den fluiddurchlässigen Innenraum 204 begrenzt, eingelassen sind.

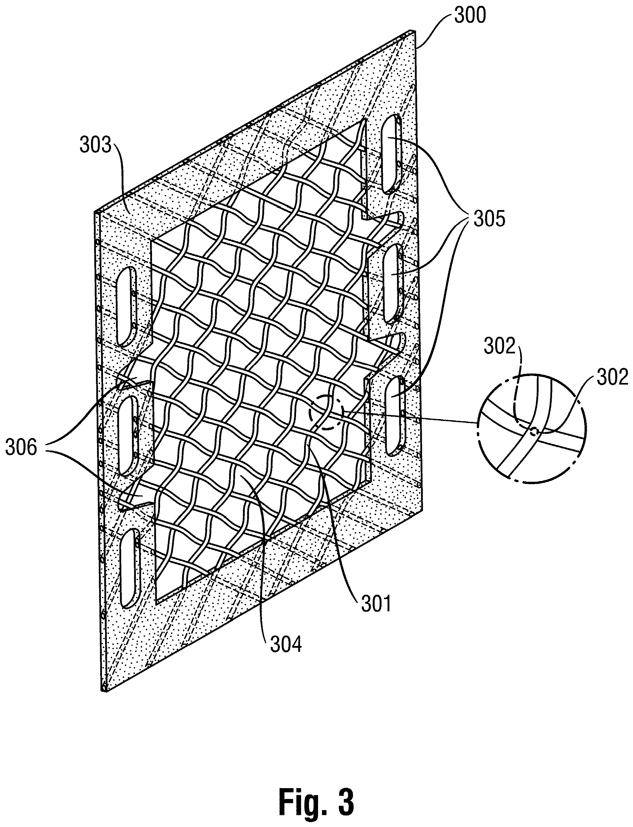

Figur 3 zeigt eine schematische perspektivische Projektion eines Membranabstandhalters 300 des bevorzugten erfindungsgemäßen Zellpakets nach Figur 1, der kein Abstandshalter zur Laminarströmung ist. Der Membranabstandhalter 300 weist einen Rahmen 303 und im Innenraum 304 verlaufende Abstandselemente auf, die als Gewebe 301 mit Leinwandbindung ausgebildet sind, so dass punktförmige Membrankontaktbereiche 302 resultieren. Der Rahmen 303 ist dabei realisiert als Materialverbund aus dem Gewebe 301 und einem gummielastischen Material, so dass die Freiräume im Randbereich des Gewebes 301 vom gummielastischen Material ausgefüllt sind und die Dicke des Rahmens 303 in etwa der Gewebestärke entspricht. Auf gegenüberliegenden Seiten des Rahmens 303 des Membranabstandshalters 300 sind jeweils abwechselnd einfache Bohrungen 305 als Durchlassöffnungen und einfache Bohrungen mit Aussparung 306 als Verteilelemente eingelassen, wobei die Aussparungen der einfachen Bohrungen 306 der Verteilelemente so eingelassen sind, dass ein Teilvolumenstrom eines Fluids durch diese Bohrungen 306 in den vom Rahmen 303 begrenzten Innenraum 304 des Membranabstandshalters 300 hineinfließen und durch den Innenraum 304 hindurchfließen kann, um auf der jeweiligen gegenüberliegenden Seite des Rahmens 303 durch korrespondierende einfache Bohrungen mit Aussparung 306 aus dem Innenraum 304 hinauszufließen.

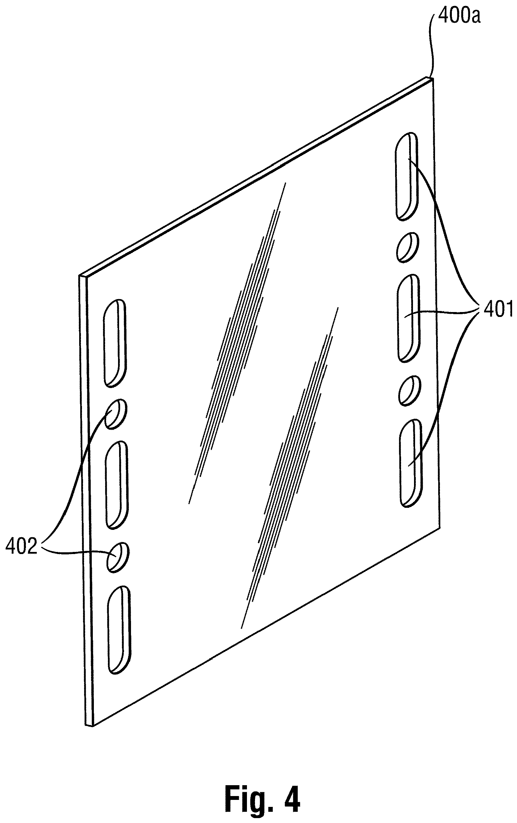

Figur 4 zeigt eine schematische perspektivische Projektion einer Membran 400a des bevorzugten Zellpakets 100 nach Figur 1. Die Membran 400a weist im Randbereich auf gegenüberliegenden Seiten Durchlassöffnungen auf, wobei sich auf jeder Seite Durchlassöffnungen 406 zu den Segmenten 110 mit Membranabstandshaltern zur Laminarströmung 200 mit Durchlassöffnungen 405 zu den Segmenten 110 mit Membranabstandshaltern 300, die keine Abstandshalter zur Laminarströmung sind, abwechseln. Die Durchlassöffnungen 405 und 406 sind dabei als einfache Bohrungen ausgestaltet. Eine entsprechende schematische perspektivische Projektion einer Membran 400b ist identisch mit Figur 4.

Figur 5 zeigt eine schematische perspektivische Projektion eines der das Zellpaket 100 nach Figur 1 begrenzenden Stromabnehmer 500, die im Randbereich einfache Bohrungen 505, 506 für den Einlass oder Auslass der Volumenströme $V_K$ 105 des Konzentrats und $V_B$ 106 der Badflüssigkeit aufweisen. In den einfachen Bohrungen 505, 506 sind elektrisch isolierende Hülsen 503 eingelassen. Die Stromabnehmer 500 bestehen aus Edelstahl mit der Werkstoffnummer 1.4401 gemäß Europäischer Norm. Beide das Zellpaket 100 begrenzende Stromabnehmer 500 sind baugleich und unterscheiden sich im Betrieb des erfindungsgemäßen Verfahrens einzig dadurch, dass die einfachen Bohrungen 505, 506 des einen Stromabnehmers 500 die Einlasspunkte der Volumenströme $V_K$ 105 des Konzentrats und $V_B$ 106 der Badflüssigkeit in das Zellpaket 100 darstellen, während die einfachen Bohrungen 505, 506 des gegenüberliegenden zweiten Stromabnehmers 500 die entsprechenden Auslasspunkte für die Volumenströme $V_K$ 105 des Konzentrats und $V_B$ 106 der Badflüssigkeit sind.

Bezugszeichenliste:

| | |
|------|------------------------------------------------------|
| 100  | Zellpaket |
| 101  | Einlass Volumenstrom Konzentrat |
| 102  | Einlass Volumenstrom Badflüssigkeit |
| 103  | Auslass Volumenstrom Konzentrat |
| 104  | Auslass Volumenstrom Badflüssigkeit |
| 105  | Teilvolumenstrom $\delta_i(V_K)$ |
| 106  | Teilvolumenstrom $\delta_i(V_B)$ |
| 107  | Serie von Membranen |
| 108a | Segment für Teilvolumenstrom $\delta_i(V_B)$ |
| 108b | Segment für Teilvolumenstrom $\delta_i(V_K)$ |
| 108c | Segment begrenzt durch Stromabnehmer 500 und Membran 400a |
| 109  | Einfache Bohrung |
| 110  | Verteilelement |
| 200  | Membranabstandshalter zur Laminarströmumg |
| 201  | Steg |

(fortgesetzt)

| | |
|---|---|
| 202 | Membrankontaktbereich |
| 203 | Rahmen |
| 204 | Innenraum |
| 205 | Einfache Bohrung für Konzentrat |
| 206 | T-Bohrung für Badflüssigkeit |
| 300 | Membranabstandshalter |
| 301 | Gewebe |
| 302 | Membrankontaktbereich |
| 303 | Rahmen aus gummielastischem Material und Gewebe |
| 304 | Innenraum |
| 305 | Einfache Bohrung für Badflüssigkeit |
| 306 | Einfache Bohrung mit Aussparung für Konzentrat |
| 400a | Äußere Membran |
| 400b | Innere Membran |
| 401 | Durchlassöffnung zum Segmentvolumen mit Membranabstandshalter 200 |
| 402 | Durchlassöffnung zum Segmentvolumen mit Membranabstandshalter 300 |
| 500 | Stromabnehmer |
| 501 | Trägerplatten |
| 503 | Isolierende Hülsen |
| 505 | Einfache Bohrung für Konzentrat |
| 506 | Einfache Bohrung für Badflüssigkeit |

**Patentansprüche**

1. Zellpaket (100) zur Elektrodialyse umfassend einen Membranstapel bestehend aus einer Anzahl n von Membranen (400a, 400b) und n+1 flächig ausgebildeten Membranabstandshaltern (200, 300), die jeweils einen Rahmen (203, 303) aufweisen, der einen orthogonal zur Stapelrichtung fluiddurchlässigen Innenraum (204, 304) begrenzt, wobei die n+1 Membranabstandshalter (200, 300) und die n Membranen (400a, 400b) in Stapelrichtung alternierend angeordnet sind, wobei sämtliche Membranen (400a, 400b) Kationenaustauscher oder sämtliche Membranen (400a, 400b) Anionenaustauscher darstellen, **dadurch gekennzeichnet, dass** zumindest ein Teil der Membranabstandshalter (200, 300), die keine äußeren Abstandshalter des Stapels sind, ausgewählt ist aus Membranabstandshaltern zur Laminarströmung (200), die so ausgestaltet sind, dass sie in ihrem fluiddurchlässigen Innenraum (204) mit jeder der jeweiligen unmittelbar benachbarten Membranen eine Mehrzahl von voneinander beabstandeten linienförmigen Kontaktbereichen (202) aufweisen, wobei die mit zumindest einer der unmittelbar benachbarten Membranen gebildeten linienförmigen Kontaktbereiche (202) gleichgerichtet zu einander verlaufen und sich nicht kreuzen und der mittlere Abstand dieser linienförmigen Kontaktbereiche zueinander nicht kleiner als die Beabstandung der durch diese Membranabstandhalter (200) voneinander getrennten Membranen in Richtung ihrer Flächennormalen ist.

2. Zellpaket (100) nach Anspruch 1 umfassend einen Membranstapel bestehend aus einer geraden Anzahl n von Membranen (400a, 400b), wobei zumindest jeder der Membranabstandshalter (200, 300) des Zellpakets (100), der ein in Stapelrichtung zweiter Membranabstandshalter ist, vorzugsweise nur jeder der Membranabstandshalter (200, 300) des Zellpakets (100), der ein in Stapelrichtung zweiter Membranabstandshalter ist, ein Membranabstandshalter zur Laminarströmung (200) ist.

3. Zellpaket (100) nach einem oder beiden der vorherigen Ansprüche, **dadurch gekennzeichnet, dass** die Membranabstandshalter zur Laminarströmung (200) im Innenraum (204) jeweils keine weiteren Kontaktbereiche anderer Art mit einer oder beiden der jeweiligen unmittelbar benachbarten Membranen aufweisen, deren mittlere Beabstandung zueinander kleiner als das zweifache der Beabstandung der unmittelbar benachbarten Membranen zueinander ist, und vorzugsweise jeweils keine weiteren Kontaktbereiche anderer Art mit den jeweiligen unmittelbar benachbarten Membranen aufweisen.

4.  Zellpaket (100) nach einem oder mehreren der vorherigen Ansprüche, **dadurch gekennzeichnet, dass** die Kontaktbereiche (202) der Membranabstandshaltern zur Laminarströmung (200) im Innenraum (204) geradlinig sind und vorzugsweise eine Länge von zumindest 50%, besonders bevorzugt von zumindest 80% der Erstreckung des Innenraums (204) in Richtung des geradlinigen Kontaktbereiches (202) aufweisen.

5.  Zellpaket (100) nach einem oder mehreren der vorherigen Ansprüche, **dadurch gekennzeichnet, dass** die Membranabstandshalter zur Laminarströmung (200) die unmittelbar benachbarten Membranen in Stapelrichtung auf zumindest $10^{-3}$ m beabstanden.

6.  Zellpaket (100) nach einem oder mehreren der vorherigen Ansprüche, **dadurch gekennzeichnet, dass** die Membranabstandshalter zur Laminarströmung (200) im Innenraum (204) eine Mehrzahl von beabstandet zueinander angeordneten Abstandselementen (201) aufweisen, wobei zumindest ein Fixierelement (203) vorgesehen ist, welches ein Abstandselement (201) mit einem jeweils unmittelbar benachbarten Abstandselement (201) verbindet, um eine Lagefixierung der Abstandselemente (201) zueinander zu gewährleisten und wobei jedes Abstandselement (201) einen Membrankontaktbereich zur linienförmigen Berührung entweder einer unmittelbar benachbarten Membran oder zwei gegenüberliegende Membrankontaktbereiche (202) zur linienförmigen Berührung beider unmittelbar benachbarten Membranen aufweist, wobei alle Membrankontaktbereiche (202) aller Abstandselemente (201) zur linienförmigen Berührung nur einer der unmittelbar benachbarten Membranen orthogonal zur Stapelrichtung und gleichgerichtet zueinander verlaufen.

7.  Zellpaket (100) nach Anspruch 6, **dadurch gekennzeichnet, dass** das zumindest eine Fixierelement (203) derart mit den Abstandselementen (201) verbunden ist, dass das zumindest eine Fixierelement (203) des Abstandshalters (200) im Innenraum (204) keine Membrankontaktbereiche zur linienförmigen Berührung zumindest einer der unmittelbar benachbarten Membran aufweist, welche einen Kontaktbereich (202) eines oder mehrerer der Abstandselemente (201) kreuzen, und dass das zumindest eine Fixierelement (203) des Membranabstandshalters (200) vorzugsweise im Innenraum (204) keinen Membrankontaktbereich zur linienförmigen Berührung zumindest einer der unmittelbar benachbarten Membran aufweisen.

8.  Zellpaket (100) nach einem oder mehreren der vorherigen Ansprüche, **dadurch gekennzeichnet, dass** jeder Membranabstandshalter zur Laminarströmung (200) in Stapelrichtung gleichartig zur einen Seite von einer Membran begrenzt wird, die selektiv durchlässig für polyvalente Ionen, und in Stapelrichtung gleichartig zur anderen Seite von einer Membran begrenzt wird, die selektiv durchlässig für monovalente Ionen ist.

9.  Zellpaket (100) nach einem oder mehreren der vorherigen Ansprüche, **dadurch gekennzeichnet, dass** jeder Membranabstandshalter (300), der kein Membranabstandshalter zur Laminarströmung ist, im Innenraum (304) als Vlies, Gewebe (301) oder Gewirke ausgebildet ist.

10. Verfahren zur Reduzierung der Konzentration störender polyvalenter Ionen in einem wässrigen Bad enthaltend ein dispergiertes organisches Bindemittel und polyvalente Ionen,

    - bei dem ein Volumenstrom $V_B$ (102) der Badflüssigkeit aus dem wässrigen Bad enthaltend die Badflüssigkeit und ein Volumenstrom $V_K$ (101) eines wässrigen Konzentrates aus einem Konzentratreservoir bevorratend das Konzentrat in ein Zellpaket (100) zur Elektrodialyse umfassend einen Membranstapel einer Mehrzahl von zueinander beabstandeten Membranen (400a, 400b), der für den Fall, dass störende polyvalente Kationen in der Badflüssigkeit enthalten sind, ausschließlich Kationenaustauscher, und für den Fall, dass störende polyvalente Anionen in der Badflüssigkeit enthalten sind, ausschließlich Anionenaustauscher umfasst, und elektrisch leitfähige Stromabnehmer (500), die den Membranstapel beidseitig in Stapelrichtung begrenzen, eingespeist werden,
    - bei dem die Volumenströme $V_B$ (102) und $V_K$ (101) innerhalb des Zellpakets (100) in Teilvolumenströme $\delta_i(V_B)$(106) und $\delta_i(V_K)$ (105) zerfallen, die orthogonal zur Flächennormalen einer Serie (107) von Membranen (400a, 400b) des Membranstapels durch die von unmittelbar benachbarten und voneinander beabstandeten Membranen der Serie (107) von Membranen (400a, 400b) gebildeten Segmente (108a, 108b) räumlich voneinander getrennt hindurchströmen, wobei sich Segmente (108a) der Serie (107) von Membranen (400a, 400b), durch die lediglich ein Teilvolumenstrom $\delta_i(V_B)$(106) der Badflüssigkeit hindurchströmt, mit solchen Segmenten (108b) der Serie (107) von Membranen (400a, 400b), durch die lediglich ein Teilvolumenstrom $\delta_i(V_K)$ (105) des Konzentrats hindurchströmt, in Stapelrichtung abwechseln,

- bei dem jede der äußeren Membranen des Membranstapels (400a) auf der dem unmittelbar benachbartem Stromabnehmer (500) zugewandten Seite entweder mit einem wässrigen Elektrolyten in Kontakt steht, der durch das vom jeweiligen Stromabnehmer (500) und der jeweiligen äußeren Membran gebildete Segment (108c) vom wässrigen Konzentrat und der Badflüssigkeit räumlich getrennt ist, oder ebenfalls mit einem Teil-volumenstrom $\delta_i(V_K)$ (105) des wässrigen Konzentrats angeströmt wird,

- bei dem zeitweise oder dauerhaft eine elektrische Spannung an die elektrisch leitfähigen Stromabnehmer (500) angelegt wird, die mit dem wässrigen Elektrolyten und/oder dem wässrigen Konzentrat in Kontakt stehen, wobei die elektrische Spannung hinreichend groß ist, um die elektrolytische Zersetzung des wässrigen Elektrolyten und/oder des Konzentrats herbeizuführen,

- und bei dem die Teilvolumenströme $\delta_i(V_B)$(106) der Badflüssigkeit nach Durchlaufen des Membranstapels vereinigt und in das wässrige Bad zurückgespeist werden, während die Teilvolumenströme $\delta_i(V_K)$ (105) des wässrigen Konzentrats nach Durchlaufen des Membranstapels vereinigt und zumindest teilweise in das Konzentratreservoir überführt werden,

**dadurch gekennzeichnet, dass** die Badflüssigkeit innerhalb der Segmente (108a) der Serie (107) von Membranen (400a, 400b) benachbarte Membranen laminar anströmt, wofür die Bedingung erfüllt sein muss, dass das Verhältnis von mittlerer Fließgeschwindigkeit der Badflüssigkeit in Metern pro Sekunde innerhalb der von der Badflüssigkeit mit den Teilvolumenströmen $\delta_i(V_B)$(106) durchströmten Segmente (108a) des Zellpakets (100) zur Beabstandung der Membranen in Richtung ihrer Flächennormalen innerhalb dieser Segmente (108a) in Metern kleiner als 100 ist

11. Verfahren nach Anspruch 10, **dadurch gekennzeichnet, dass** das Verhältnis von mittlerer Fließgeschwindigkeit der Badflüssigkeit in Metern pro Sekunde innerhalb der von der Badflüssigkeit mit den Teilvolumenströmen $\delta_i(V_B)$(106) durchströmten Segmente (108a) des Zellpakets (100) zur Beabstandung der Membranen in Richtung ihrer Flächennormalen innerhalb dieser Segmente (108a) in Metern kleiner als 20 ist, wobei die mittlere Fließgeschwindigkeit der Badflüssigkeit vorzugsweise nicht größer als 0,1 m/s ist.

12. Verfahren nach einem oder beiden der Ansprüche 10 und 11, **dadurch gekennzeichnet, dass** folgende Bedingung innerhalb der von der Serie (107) der Membranen (400a, 400b) gebildeten Segmente (108a, 108b) des Zellpakets erfüllt vorliegt: $\dfrac{d_B^2 \cdot x(V_B) \cdot \delta_i(V_K)}{d_K^2 \cdot x(V_K) \cdot \delta_i(V_B)}$ ist größer als 3, vorzugsweise größer als 4, wobei

$\delta_i(V_B)$: der Teilvolumenstrom der Badflüssigkeit (106) innerhalb des Segments (108a) [m³/s],

$\delta_i(V_K)$: der Teilvolumenstrom des Konzentrats (105) innerhalb des Segments (108b) [m³/s],

$d_B, d_K$: die Beabstandung der Membranen des jeweiligen Segments (108a, 108b) in Richtung ihrer Flächennormalen [m] und

$x(V_K; V_B)$: der Segmentvolumenfaktor, der den Anteil an freiem Volumen innerhalb des jeweiligen durchströmten Segments (108a, 108b) angibt [$0 < x(V_K; V_B) \leq 1$], ist.

13. Verfahren nach einem oder mehreren der Ansprüche 10 bis 12, **dadurch gekennzeichnet, dass** die elektrische Spannung pulspotentiostatisch aufgeprägt wird, wobei die Pulsdauer vorzugsweise im Bereich von 0,5 bis 50 Sekunden, vorzugsweise im Bereich von 0,8 bis 2 Sekunden, und die Pulsruhephase vorzugsweise im Bereich von 0,2 bis 10 Sekunden, besonders bevorzugt im Bereich von 0,4 bis 1 Sekunde liegt.

14. Verfahren nach einem oder mehreren der Ansprüche 10 bis 13, **dadurch gekennzeichnet, dass** aus einem Elektrolytreservoir bevorratend den wässrigen Elektrolyten ein Volumenstrom $V_E$ des wässrigen Elektrolyten in das Zellpaket (100) eingespeist wird, der innerhalb des Zellpakets in Teilvolumenströme $\delta_i(V_E)$ zerfällt, die orthogonal zur Flächennormalen der äußeren Membranen des Membranstapels durch die von den Stromabnehmern (500) und den unmittelbar benachbarten äußeren Membranen gebildeten Segmente (108c) des Zellpakets (100) hindurchströmen und nach Durchlaufen der Segmente (108c) innerhalb des Zellpakets (100) vereinigt und zumindest teilweise in das Elektrolytreservoir überführt werden.

15. Verfahren nach einem oder mehreren der Ansprüche 10 bis 13, **dadurch gekennzeichnet, dass** ausschließlich die Volumenströme $V_B$ und $V_K$ in das Zellpaket (100) eingespeist werden, wobei die durch die von den Stromabnehmern (500) und den unmittelbar benachbarten äußeren Membranen gebildeten Segmente (108c) des Zellpakets (100) jeweils ein Teilvolumenstrom $\delta_i(V_K)$ (105) des wässrigen Konzentrats hindurchströmt, der mit den übrigen Teilvolumenströmen $\delta_i(V_K)$ (105) der wässrigen Konzentrate, die durch die Segmente (108b) der Serie (107) von Membranen (400a, 400b) hindurchströmen, nach Durchlaufen der Segmente (108c) innerhalb des Zellpakets (100) vereinigt wird.

16. Verfahren nach Anspruch 15, **dadurch gekennzeichnet, dass** ein Zellpaket (100) nach Anspruch 2 verwendet wird und die Teilvolumenströme $\delta_i(V_B)$ (106) der Badflüssigkeit ausschließlich durch diejenigen Segmente (108a) der Serie (107) von Membranen (400a, 400b) hindurchströmen, deren unmittelbar benachbarte Membranen (400a, 400b) durch Membranabstandshalter zur Laminarströmung (200) beabstandet sind.

17. Verfahren nach einem oder beiden der Ansprüche 15 und 16, **dadurch gekennzeichnet, dass** die Konzentration einer störenden polyvalenten Ionensorte im Konzentrat unterhalb einer kritischen Konzentration liegt oder gehalten wird, indem kontinuierlich oder diskontinuierlich Teilvolumina des wässrigen Konzentrats ersetzt werden durch eine wässrige Lösung mit einer elektrischen Leitfähigkeit von zumindest 1 mScm$^{-1}$ enthaltend keine polyvalenten Ionen, wobei für die kritische Konzentration einer störenden polyvalenten Ionensorte folgender Zusammenhang gilt:

$$c_s^{krit}(K) = c_s(B) \cdot \frac{\sum\limits_{i \neq s} z_i\, u_i\, c_i(K)}{\sum\limits_{j \neq s} z_j\, u_j\, c_j(B)}$$

$c_s^{krit}(K)$: kritische Konzentration der störenden polyvalenten Ionensorte im Konzentrat [mol/l]

$c_s(B)$: Konzentration der störenden polyvalenten Ionensorte in der Badflüssigkeit [mol/l]

$z_i\, u_i\, c_i(K)$: Produkte aus Ladungszahl, Ionenbeweglichkeit und Konzentration einer zur störenden Ionensorte gleich geladenen Ionensorte i im Konzentrat

$z_j\, u_j\, c_j(B)$: Produkte aus Ladungszahl, Ionenbeweglichkeit und Konzentration einer zur störenden Ionensorte gleich geladenen Ionensorte j in der Badflüssigkeit

$z_i, z_j$: Ladungszahl der Ionensorten i, j

$u_i, u_j$: Ionenbeweglichkeit der Ionensorten i, j [m$^2$s$^{-1}$V$^{-1}$]

$c_i, c_j$: Konzentration der Ionensorten i, j [mol/l]

18. Verfahren nach einem oder mehreren der Ansprüche 10 bis 17, **dadurch gekennzeichnet, dass** die Badflüssigkeit ein anionisch dispergiertes Bindemittel und störende polyvalente Kationen enthält, wobei die störenden polyvalenten Kationen ausgewählt sind aus Zink-Ionen, Eisen-Ionen oder Aluminium-Ionen.

19. Verfahren nach Anspruch 18, **dadurch gekennzeichnet, dass** in der Badflüssigkeit zusätzlich freie Fluorid-Ionen enthalten sind.

20. Verfahren nach einem oder beiden der Ansprüche 18 und 19, **dadurch gekennzeichnet, dass** die Membranen (400a, 400b) der Serie (107) von Membranen (400a, 400b), die auf der der Kathode zugewandten Seite vom wässrigen Konzentrat angeströmt werden oder mit dem wässrigen Elektrolyten in Kontakt stehen, selektiv durchlässig für störende polyvalente Kationen sind, während die Membranen (400a, 400b) der Serie (107) von Membranen (400a, 400b), die auf der der Anode zugewandten Seite vom wässrigen Konzentrat angeströmt werden oder mit dem wässrigen Elektrolyten in Kontakt stehen, selektiv durchlässig für monovalente Kationen sind.

## Claims

1. A cell package (100) for electrodialysis, comprising a membrane stack consisting of a number n of membranes (400a, 400b) and n+1 flat membrane spacers (200, 300) which each have a frame (203, 303) that delimits an interior (204, 304) through which fluid can flow orthogonally to the stacking direction, the n+1 membrane spacers (200, 300) and the n membranes (400a, 400b) being arranged alternately in the stacking direction, all of the membranes (400a, 400b) being cation exchangers or all of the membranes (400a, 400b) being anion exchangers, **characterized in**

**that** at least some of the membrane spacers (200, 300) that are not outer spacers of the stack are selected from membrane spacers for laminar flow (200) that are designed such that they have, in the interior (204) thereof through which fluid can flow, a plurality of mutually spaced linear contact regions (202) with each of the respective immediately adjacent membranes, the linear contact regions (202) formed with at least one of the immediately adjacent membranes extending in the same direction as one another and not crossing, and the average distance between said linear contact regions being no less than the spacing of the membranes that are mutually separated by said membrane spacers (200) in the direction of the surface normals thereof.

2. The cell package (100) according to claim 1, comprising a membrane stack consisting of an even number n of membranes (400a, 400b), wherein at least each of the membrane spacers (200, 300) of the cell package (100) which is a second membrane spacer in the stacking direction, preferably only each of the membrane spacers (200, 300) of the cell package (100) which is a second membrane spacer in the stacking direction, is a membrane spacer for laminar flow (200).

3. The cell package (100) according to one or both of the preceding claims, **characterized in that** the membrane spacers for laminar flow (200), in the interior (204), each have no further contact regions of any other type with one or both of the respective immediately adjacent membranes, of which the average spacing from one another is less than twice the spacing of the immediately adjacent membranes from one another, and preferably each have no further contact regions of any other type with the respective immediately adjacent membranes.

4. The cell package (100) according to one or more of the preceding claims, **characterized in that** the contact regions (202) of the membrane spacers for laminar flow (200), in the interior (204), are rectilinear and preferably have a length of at least 50%, particularly preferably of at least 80% of the extent of the interior (204) in the direction of the rectilinear contact region (202).

5. The cell package (100) according to one or more of the preceding claims, **characterized in that** the membrane spacers for laminar flow (200) space the immediately adjacent membranes apart in the stacking direction by at least $10^{-3}$m.

6. The cell package (100) according to one or more of the preceding claims, **characterized in that** the membrane spacers for laminar flow (200), in the interior (204), have a plurality of spacing elements (201) arranged so as to be mutually spaced, at least one fixing element (203) being provided which connects a spacing element (201) to an immediately adjacent spacing element (201) in order to ensure that the spacing elements (201) are fixed in position in relation to one another, and each spacing element (201) having a membrane contact region for linear contact with either an immediately adjacent membrane or two opposite membrane contact regions (202) for linear contact with both immediately adjacent membranes, all of the membrane contact regions (202) of all of the spacing elements (201) extending orthogonally to the stacking direction and in the same direction as one another for linear contact with only one of the immediately adjacent membranes.

7. The cell package (100) according to claim 6, **characterized in that** the at least one fixing element (203) is connected to the spacing elements (201) such that the at least one fixing element (203) of the spacer (200), in the interior (204), has no membrane contact regions for linear contact with at least one of the immediately adjacent membranes which cross a contact region (202) of one or more of the spacing elements (201), and **in that** the at least one fixing element (203) of the membrane spacer (200) preferably has, in the interior (204), no membrane contact region for linear contact with at least one of the immediately adjacent membranes.

8. The cell package (100) according to one or more of the preceding claims, **characterized in that** each membrane spacer for laminar flow (200) is similarly delimited in the stacking direction on one side by a membrane which selectively allows polyvalent ions to flow through, and is similarly delimited in the stacking direction on the other side by a membrane that selectively allows monovalent ions to flow through.

9. The cell package (100) according to one or more of the preceding claims, **characterized in that** each membrane spacer (300) which is not a membrane spacer for laminar flow is formed in the interior (304) as a non-woven fabric, woven fabric (301) or knitted fabric.

10. A method for reducing the concentration of interfering polyvalent ions in an aqueous bath containing a dispersed organic binder and polyvalent ions,

- in which a volume flow $V_B$ (102) of the bath liquid from the aqueous bath containing the bath liquid and a volume flow $V_K$ (101) of an aqueous concentrate from a concentrate reservoir storing the concentrate is fed into a cell package (100) for electrodialysis comprising a membrane stack of a plurality of mutually spaced membranes (400a, 400b), which stack exclusively comprises cation exchangers if interfering polyvalent cations are contained in the bath liquid, and exclusively comprises anion exchangers if interfering polyvalent anions are contained in the bath liquid, and comprising electrically conductive current collectors (500) which delimit the membrane stack on both sides in the stacking direction,

- in which the volume flows $V_B$ (102) and $V_K$ (101) within the cell package (100) divide into partial volume flows $\delta_i(V_B)$ (106) and $\delta_i(V_K)$ (105) which flow, spatially separated from one another, through the segments (108a, 108b) formed by immediately adjacent and mutually spaced membranes of a series (107) of membranes (400a, 400b), orthogonally to the surface normals of the series (107) of membranes (400a, 400b) of the membrane stack, with segments (108a) of the series (107) of membranes (400a, 400b) through which only a partial volume flow $\delta_i(V_B)$ (106) of the bath liquid flows alternating in the stacking direction with such segments (108b) of the series (107) of membranes (400a, 400b) through which only a partial volume flow $\delta_i(V_K)$ (105) of the concentrate flows,

- in which each of the outer membranes of the membrane stack (400a), on the side facing the immediately adjacent current collector (500), is either in contact with an aqueous electrolyte which is spatially separated from the aqueous concentrate and the bath liquid by the segment (108c) formed by the particular current collector (500) and the particular outer membrane, or a partial volume flow $\delta_i(V_K)$ (105) of the aqueous concentrate also flows thereagainst,

- in which an electrical voltage is temporarily or permanently applied to the electrically conductive current collectors (500) which are in contact with the aqueous electrolyte and/or the aqueous concentrate, the electrical voltage being sufficiently high to cause the electrolytic decomposition of the aqueous electrolyte and/or the concentrate,

- and in which the partial volume flows $\delta_j(V_B)$ (106) of the bath liquid are combined after passing through the membrane stack and fed back into the aqueous bath while the partial volume flows $\delta_i(V_K)$ (105) of the aqueous concentrate are combined after passing through the membrane stack and at least partially transferred into the concentrate reservoir,

**characterized in that** the bath liquid within the segments (108a) of the series (107) of membranes (400a, 400b) flows against adjacent membranes in a laminar manner, for which the condition must be met that the ratio of the average flow speed of the bath liquid in meters per second within the segments (108a) of the cell package (100) through which the bath liquid flows with the partial volume $\delta_i(V_B)$ (106) flows to the spacing of the membranes in the direction of the surface normals thereof within said segments (108a) in meters is less than 100.

11. The method according to claim 10, **characterized in that** the ratio of the average flow speed of the bath liquid in meters per second within the segments (108a) of the cell package (100) through which the bath liquid flows with the partial volume flows $\delta_i(V_B)$ (106) to the spacing of the membranes in the direction of the surface normals thereof within said segments (108a) in meters is less than 20, the average flow speed of the bath liquid preferably being no greater than 0.1 m/s.

12. The method according to one or both of claims 10 and 11, **characterized in that** the following condition is met within the segments (108a, 108b) of the cell package that are formed by the series (107) of membranes (400a, 400b):

$\dfrac{d_B^2 \cdot x(V_B) \cdot \delta_i(V_K)}{d_K^2 \cdot x(V_K) \cdot \delta_i(V_B)}$ is greater than 3, preferably greater than 4, where

$\delta_i(V_B)$: the partial volume flow of the bath liquid (106) within the segment (108a) [m³/s],
$\delta_i(V_K)$: the partial volume flow of the concentrate (105) within the segment (108b) [m³/s],
$d_B$, $d_K$: the spacing of the membranes of the particular segment (108a, 108b) in the direction of the surface normals [m] thereof, and
$x(V_K; V_B)$: the segment volume factor, which indicates the proportion of free volume within the particular segment through which there is a flow (108a, 108b) [0 < $x(V_K; V_B) \leq 1$].

13. The method according to one or more of claims 10 to 12, **characterized in that** the electrical voltage is impressed potentiostatically in pulses, the pulse duration being preferably in the range of from 0.5 to 50 seconds, preferably in the range of from 0.8 to 2 seconds, and the pulse resting phase being preferably in the range of from 0.2 to 10 seconds, particularly preferably in the range of from 0.4 to 1 second.

**14.** The method according to one or more of claims 10 to 13, **characterized in that** a volume flow $V_E$ of the aqueous electrolyte is fed into the cell package (100) from an electrolyte reservoir storing the aqueous electrolyte, said volume flow within the cell package dividing into partial volume flows $\delta_i(V_E)$ which flow orthogonally to the surface normals of the outer membranes of the membrane stack through the segments (108c) of the cell package (100) that are formed by the current collectors (500) and the immediately adjacent outer membranes and, after passing through the segments (108c) within the cell package (100), are combined and at least partially transferred into the electrolyte reservoir.

**15.** The method according to one or more of claims 10 to 13, **characterized in that** only the volume flows $V_B$ and $V_K$ are fed into the cell package (100), a partial volume flow $\delta_i(V_K)$ (105) of the aqueous concentrate flowing through each of the segments (108c) of the cell package (100) that are formed by the current collectors (500) and the immediately adjacent outer membranes, which partial volume flow is combined with the other partial volume flows $\delta_i(V_K)$ (105) of the aqueous concentrates which flow through the segments (108b) of the series (107) of membranes (400a, 400b), after passing through the segments (108c) within the cell package (100).

**16.** The method according to claim 15, **characterized in that** a cell package (100) according to claim 2 is used and the partial volume flows $\delta_i(V_B)$ (106) of the bath liquid flow exclusively through the segments (108a) of the series (107) of membranes (400a, 400b) of which the immediately adjacent membranes (400a, 400b) are spaced apart by membrane spacers for laminar flow (200).

**17.** The method according to one or both of claims 15 and 16, **characterized in that** the concentration of an interfering polyvalent ion species in the concentrate is or is maintained below a critical concentration by continuously or discontinuously replacing partial volumes of the aqueous concentrate with an aqueous solution having an electrical conductivity of at least 1 mScm$^{-1}$ containing no polyvalent ions, the following relationship applying to the critical concentration of an interfering polyvalent ion species:

$$c_s^{crit}(K) = c_s(B) \cdot \frac{\sum_{i \neq s} z_i u_i c_i(K)}{\sum_{j \neq s} z_j u_j c_j(B)}$$

$c_s^{crit}(K)$: critical concentration of the interfering polyvalent ion species in the concentrate [mol/l]

$c_s(B)$: concentration of the interfering polyvalent ion species in the bath liquid [mol/l]

$z_i u_i c_i(K)$: products of the charge number, ion mobility and concentration, in the concentrate, of an ion species i that is charged in the same way as the interfering ion species

$z_j u_j c_j(B)$: products of the charge number, ion mobility and concentration, in the bath liquid, of an ion species j that is charged in the same way as the interfering ion species

$z_i$, $z_j$: charge number of the ion species i, j

$u_i$, $u_j$: ion mobility of the ion species i, j [m$^2$S$^{-1}$V$^{-1}$]

$c_i$, $c_j$: concentration of the ion species i, j [mol/l]

**18.** The method according to one or more of claims 10 to 17, **characterized in that** the bath liquid contains an anionically dispersed binder and interfering polyvalent cations, the interfering polyvalent cations being selected from zinc ions, iron ions or aluminum ions.

**19.** The method according to claim 18, **characterized in that** free fluoride ions are additionally contained in the bath liquid.

**20.** The method according to one or both of claims 18 and 19, **characterized in that** the membranes (400a, 400b) of the series (107) of membranes (400a, 400b) against which the aqueous concentrate flows or which are in contact with the aqueous electrolyte on the side facing the cathode selectively allow interfering polyvalent cations to flow through, while the membranes (400a, 400b) of the series (107) of membranes (400a, 400b) against which the aqueous concentrate flows or which are in contact with the aqueous electrolyte on the side facing the anode selectively allow monovalent cations to flow through.

**Revendications**

**1.** Cellules chargées (100) destinées à l'électrodialyse comprenant un empilement de membranes composé d'un nombre n de membranes (400a, 400b) et d'un nombre n+1 d'espaceurs de membrane réalisés de façon plane (200, 300), présentant respectivement un cadre (203, 303) qui délimite orthogonalement à la direction d'empilement un espace intérieur perméable aux fluides (204, 304), les n+1 espaceurs de membrane (200, 300) et les n membranes (400a, 400b) étant disposés alternativement dans la direction de l'empilement, toutes les membranes (400a, 400b) représentant des échangeurs de cations ou toutes les membranes (400a, 400b) représentant des échangeurs d'anions, **caractérisées en ce qu'**au moins une partie des espaceurs de membrane (200, 300) qui ne sont pas des espaceurs externes de l'empilement est choisie parmi les espaceurs de membrane pour l'écoulement laminaire (200), lesquels espaceurs de membrane sont conçus de telle sorte qu'ils présentent dans leur espace intérieur perméable aux fluides (204) une pluralité de zones de contact linéaires espacées (202) les unes des autres pour chacune des membranes immédiatement adjacentes respectives, les zones de contact linéaires (202) formées avec au moins une des membranes immédiatement adjacentes s'étendant dans la même direction les unes aux autres et ne se croisant pas et l'espace moyen entre ces zones de contact linéaires n'est pas inférieur à l'espacement des membranes séparées par ces espaceurs de membrane (200) en direction de leur normale à la surface.

2. Cellules chargées (100) selon la revendication 1, comprenant un empilement de membranes composé d'un nombre pair n de membranes (400a, 400b), au moins chaque espaceur de membrane (200, 300) des cellules chargées (100) qui est un second espaceur de membrane dans la direction d'empilement, de préférence uniquement chaque espaceur de membrane (200, 300) des cellules chargées (100) qui est un second espaceur de membrane dans la direction d'empilement, est un espaceur de membrane destiné à l'écoulement laminaire (200).

3. Cellules chargées (100) selon l'une ou les deux des revendications précédentes, **caractérisées en ce que** les espaceurs de membrane destinés à l'écoulement laminaire (200) ne présentent chacun aucune autre zone de contact d'un autre type dans l'espace intérieur (204) avec l'une ou les deux des membranes immédiatement adjacentes respectives, dont l'espacement moyen les unes des autres est inférieur au double de l'espacement des membranes immédiatement adjacentes les unes aux autres, et ne présentent de préférence respectivement pas d'autres zones de contact d'un autre type avec les membranes immédiatement adjacentes respectives.

4. Cellules chargées (100) selon l'une ou plusieurs des revendications précédentes, **caractérisées en ce que** les zones de contact (202) des espaceurs de membrane destinées à l'écoulement laminaire (200) sont rectilignes dans l'espace intérieur (204) et présentent de préférence une longueur d'au moins 50 %, plus préférentiellement au moins 80 % de l'étendue de l'espace intérieur (204) en direction de la zone de contact rectiligne (202).

5. Cellules chargées (100) selon l'une ou plusieurs des revendications précédentes, **caractérisées en ce que** les espaceurs de membrane destinés à l'écoulement laminaire (200) espacent les membranes immédiatement adjacentes dans la direction d'empilement d'au moins $10^{-3}$m.

6. Cellules chargées (100) selon l'une ou plusieurs des revendications précédentes, **caractérisées en ce que** les espaceurs de membrane destinés à l'écoulement laminaire (200) présentent une pluralité d'éléments d'espacement espacés les uns des autres (201) dans l'espace intérieur (204), au moins un élément de fixation (203) qui relie un élément d'espacement (201) à un élément d'espacement immédiatement adjacent (201) afin de garantir la fixation en position des éléments d'espacement (201) les uns par rapport aux autres étant prévu, et chaque élément d'espacement (201) présentant une zone de contact de membrane destinée à toucher linéairement soit une membrane immédiatement adjacente soit deux zones de contact de membrane opposées (202) destinées à toucher linéairement les deux membranes immédiatement adjacentes, toutes les zones de contact de membrane (202) de tous les éléments d'espacement (201), destinées à toucher linéairement uniquement l'une des membranes immédiatement adjacentes, s'étendant orthogonalement à la direction d'empilement et dans la même direction.

7. Cellules chargées (100) selon la revendication 6, **caractérisées en ce que** l'au moins un élément de fixation (203) est relié aux éléments d'espacement (201) de sorte que l'au moins un élément de fixation (203) de l'espaceur (200) ne présente pas de zones de contact de membrane dans l'espace intérieur (204) pour toucher linéairement au moins l'une des membranes immédiatement adjacentes, lesquels éléments d'espacement croisent une zone de contact (202) d'un ou de plusieurs des éléments d'espacement (201), et que l'au moins un élément de fixation (203) de l'espaceur de membrane (200) ne présente de préférence aucune zone de contact de membrane dans l'espace intérieur (204) pour toucher linéairement au moins une des membranes immédiatement adjacentes.

8. Cellules chargées (100) selon l'une ou plusieurs des revendications précédentes, **caractérisées en ce que** chaque espaceur de membrane destiné à l'écoulement laminaire (200) est délimité de manière identique dans la direction d'empilement sur un côté par une membrane qui est sélectivement perméable à des ions polyvalents, et est délimité de manière identique dans la direction d'empilement sur l'autre côté par une membrane qui est sélectivement perméable aux ions monovalents.

9. Cellules chargées (100) selon l'une ou plusieurs des revendications précédentes, **caractérisées en ce que** chaque espaceur de membrane (300) qui n'est pas un espaceur de membrane destiné à l'écoulement laminaire est réalisé dans l'espace intérieur (304) sous forme de non-tissé, de tissu tissé (301) ou de tricot.

10. Procédé de réduction de la concentration d'ions polyvalents interférents dans un bain aqueux contenant un liant organique dispersé et des ions polyvalents,

- dans lequel un débit volumique $V_B$ (102) du liquide de bain provenant du bain aqueux contenant le liquide de bain et un débit volumique $V_K$ (101) d'un concentré aqueux provenant d'un réservoir de concentré stockant le concentré dans des cellules chargées (100) destinées à l'électrodialyse comprenant un empilement de membranes d'une pluralité de membranes espacées (400a, 400b) les unes des autres, lequel empilement de membranes, dans le cas où des cations polyvalents interférents sont contenus dans le liquide de bain, contient seulement des échangeurs de cations, et dans le cas où des anions polyvalents interférents sont contenus dans le liquide de bain, contient seulement des échangeurs d'anions, et des collecteurs de courant électro-conducteurs (500) qui délimitent l'empilement de membranes des deux côtés dans la direction de l'empilement, sont injectés,
- dans lequel les débits volumiques $V_B$ (102) et $V_K$ (101) à l'intérieur des cellules chargées (100) sont désintégrés en débits volumiques partiels $\delta_i(V_B)$ (106) et $\delta_i(V_K)$ (105) qui s'écoulent spatialement orthogonalement à la normale à la surface d'une série (107) de membranes (400a, 400b) de l'empilement de membranes par les segments formés par les membranes immédiatement adjacentes et espacées les unes des autres de la série (107) de membranes (400a, 400b) (108a, 108b), des segments (108a) de la série (107) de membranes (400a, 400b) à travers lesquelles ne s'écoule qu'un débit volumique partiel $\delta_i(V_B)$ (106) du liquide de bain, s'alternant dans la direction de l'empilement avec de tels segments (108b) de la série (107) de membranes (400a, 400b) à travers lesquelles ne s'écoule qu'un débit volumique partiel $\delta_i(V_K)$ (105) du concentré,
- dans lequel chaque membrane externe de l'empilement de membranes (400a) du côté faisant face au collecteur de courant immédiatement adjacent (500) est soit en contact avec un électrolyte aqueux qui est séparé spatialement du concentré aqueux et du liquide de bain par le segment (108c) formé par le collecteur de courant respectif (500) et la membrane externe respective, ou est également alimentée par un débit volumique partiel $\delta_i(V_K)$ (105) du concentré aqueux,
- dans lequel une tension électrique est appliquée de façon temporaire ou permanente aux collecteurs de courant électro-conducteurs (500) qui sont en contact avec l'électrolyte aqueux et/ou le concentré aqueux, la tension électrique étant suffisamment élevée pour provoquer la décomposition électrolytique de l'électrolyte aqueux et/ou du concentré,
- et dans lequel les débits volumiques partiels $\delta_i(VB)$ (106) du liquide de bain sont réinjectés dans le bain aqueux après avoir traversé l'empilement de membranes, alors que les débits volumiques partiels $\delta_i(V_K)$ (105) du concentré aqueux sont combinés après avoir traversé l'empilement de membranes et transférés au moins partiellement dans le réservoir de concentré,

**caractérisé en ce que** le liquide de bain à l'intérieur des segments (108a) de la série (107) de membranes (400a, 400b) alimente des membranes laminairement, pour ce faire la condition, selon laquelle le rapport de la vitesse de circulation moyenne du liquide de bain en mètres par seconde à l'intérieur des segments (108a) des cellules chargées (100) traversés par le liquide de bain avec les débits volumiques partiels $\delta_i(V_B)$ (106) à l'espacement des membranes en direction de leur normale à la surface à l'intérieur de ces segments (108a) est inférieur à 100 mètres, doit être remplie

11. Procédé selon la revendication 10, **caractérisé en ce que** le rapport entre la vitesse de circulation moyenne du liquide de bain en mètres par seconde à l'intérieur des segments (108a) des cellules chargées (100) traversés par le liquide de bain et les débits volumiques partiels $\delta_i(V_B)$ (106) à l'espacement des membranes en direction de leur normale à la surface à l'intérieur de ces segments (108a) est inférieur à 20 mètres, la vitesse de circulation moyenne du liquide de bain n'étant de préférence pas supérieure à 0,1 m/s.

12. Procédé selon l'une ou les deux des revendications 10 et 11, **caractérisé en ce que** la condition suivante est remplie à l'intérieur des segments (108a, 108b) des cellules chargées formés par la série (107) de membranes (400a, 400b) : $\frac{d_B^2 \cdot x(V_B) \cdot \delta_i(V_K)}{d_K^2 \cdot x(V_K) \cdot \delta_i(V_B)}$ est supérieur à 3, de préférence supérieur à 4,

$\delta_i(V_B)$: étant le débit volumique partiel du liquide de bain (106) à l'intérieur du segment (108a) [m$^3$/s],

$\delta_i(V_K)$: étant le débit volumique partiel du concentré (105) à l'intérieur du segment (108b) [m$^3$/s],

$d_B$, $d_K$: étant l'espacement des membranes du segment respectif (108a, 108b) en direction de leur normale à la surface [m] et

$x(V_K; V_B)$ : étant le facteur de volume du segment qui indique la proportion de volume libre à l'intérieur du segment traversé respectif (108a, 108b) [0 < x($V_K$; $V_B$) ≤ 1].

13. Procédé selon l'une ou plusieurs des revendications 10 à 12, **caractérisé en ce que** la tension électrique est appliquée au moyen d'une impulsion potentiostatique, la durée d'impulsion se situant de préférence dans la plage de 0,5 à 50 secondes, plus préférentiellement dans la plage de 0,8 à 2 secondes, et la phase de repos d'impulsion se situant de préférence dans la plage de 0,2 à 10 secondes, plus préférentiellement dans la plage de 0,4 à 1 seconde.

14. Procédé selon l'une ou plusieurs des revendications 10 à 13, **caractérisé en ce qu'**à partir d'un réservoir d'électrolytes stockant l'électrolyte aqueux, un débit volumique $V_E$ de l'électrolyte aqueux est injecté dans les cellules chargées (100), lequel débit volumique se désintègre à l'intérieur des cellules chargées en débits volumiques partiels $\delta_i(V_E)$ qui s'écoulent orthogonalement à la normale à la surface des membranes externes de l'empilement de membranes à travers les segments (108c) des cellules chargées (100) formés par les collecteurs de courant (500) et les membranes externes immédiatement adjacentes et qui sont combinés à l'intérieur des cellules chargées (100) après avoir traversé les segments (108c) et au moins partiellement transférés dans le réservoir d'électrolytes.

15. Procédé selon l'une ou plusieurs des revendications 10 à 13, **caractérisé en ce qu'**uniquement les débits volumiques $V_B$ et $V_K$ sont injectés dans les cellules chargées (100), les segments (108c) des cellules chargées (100) formés par les collecteurs de courant (500) et les membranes externes immédiatement adjacentes étant chacun traversés par un débit volumique partiel $\delta_i(V_K)$ (105) du concentré aqueux qui est combiné avec les autres débits volumiques partiels $\delta_i(V_K)$ (105) des concentrés aqueux s'écoulant à travers les segments (108b) de la série (107) de membranes (400a, 400b) après avoir traversé les segments (108c) à l'intérieur des cellules chargées (100).

16. Procédé selon la revendication 15, **caractérisé en ce que** des cellules chargées (100) selon la revendication 2 sont utilisées et que les débits volumiques partiels $\delta_i(V_B)$ (106) du liquide de bain s'écoulent uniquement à travers les segments (108a) de la série (107) de membranes (400a, 400b) dont les membranes immédiatement adjacentes (400a, 400b) destinées à l'écoulement laminaire (200) sont espacées par des espaceurs de membrane.

17. Procédé selon l'une ou les deux des revendications 15 et 16, **caractérisé en ce que** la concentration d'une espèce d'ions polyvalents interférents dans le concentré est inférieure ou est maintenue inférieure à une concentration critique par le remplacement de façon continue ou discontinue de volumes partiels du concentré aqueux par une solution aqueuse à conductivité électrique d'au moins 1 mScm$^{-1}$ ne contenant pas d'ions polyvalents, la relation suivante s'appliquant à la concentration critique d'une espèce d'ions polyvalents interférents :

$$c_s^{krit}(K) = c_s(B) \cdot \frac{\sum_{i \neq s} z_i u_i c_i(K)}{\sum_{j \neq s} z_j u_j c_j(B)}$$

$c_s^{krit}(K)$ : concentration critique des espèces d'ions polyvalents interférents dans le concentré [mol/l]

$c_s(B)$: concentration des espèces d'ions polyvalents interférents dans le liquide de bain [mol/l]

$z_i u_i c_i(K)$: produits issus du nombre de charges, de la mobilité ionique et de la concentration d'une espèce ionique i chargée comme l'espèce ionique interférente dans le concentré

$z_j u_j c_j(B)$: produits issus du nombre de charge, de la mobilité ionique et de la concentration d'une espèce ionique i chargée comme l'espèce ionique interférente dans le liquide de bain

$z_i$, $z_j$: nombre de charge des espèces d'ions i, j

$u_i$, $u_j$: mobilité ionique des espèces d'ions i, j [m$^2$s$^{-1}$V$^{-1}$]

$c_i$, $c_j$: concentration des espèces ioniques i, j [mol/l]

18. Procédé selon l'une ou plusieurs des revendications 10 à 17, **caractérisé en ce que** le liquide de bain contient un liant dispersé anioniquement et des cations polyvalents interférents, les cations polyvalents interférents étant choisis parmi les ions zinc, les ions fer ou les ions aluminium.

19. Procédé selon la revendication 18, **caractérisé en ce que** des ions fluorure libres sont en outre contenus dans le liquide de bain.

20. Procédé selon l'une ou les deux des revendications 18 et 19, **caractérisé en ce que** les membranes (400a, 400b) de la série (107) de membranes (400a, 400b) qui sont alimentées par le concentré aqueux du côté faisant face à la cathode ou qui sont en contact avec l'électrolyte aqueux sont sélectivement perméables aux cations polyvalents interférents, alors que les membranes (400a, 400b) de la série (107) de membranes (400a, 400b) qui sont alimentées par le concentré aqueux du côté faisant face à l'anode ou qui sont en contact avec l'électrolyte aqueux sont sélectivement perméables aux cations monovalents.

**Fig. 1**

**Fig. 2**

**A - A**

200

204

203

201

205

206

201

**Fig. 2a**

**Fig. 3**

**Fig. 4**

Fig. 5

**IN DER BESCHREIBUNG AUFGEFÜHRTE DOKUMENTE**

**In der Beschreibung aufgeführte Patentdokumente**

- EP 0977908 A
- WO 94029495 A
- DE 3431276
- WO 0218029 A
- EP 1000654 A2
- US 4804451 A
- US 4600493 A
- US 7138444 B2
- WO 2010066785 A